# EUROPÄISCHE PATENTSCHRIFT

(11) **EP 3 494 149 B1**
(45) Veröffentlichungstag und Bekanntmachung des Hinweises auf die Patenterteilung: **01.07.2020**
(21) Anmeldenummer: 17743052.7
(22) Anmeldetag: 26.07.2017
(51) Int. Cl.: C08F 120/30, C08F 2/22, C08F 220/30

(54) **POLYISOBUTENGRUPPEN TRAGENDE MAKROMONOMERE UND DEREN HOMO- ODER COPOLYMERE**
MACROMONOMERS CARRYING POLYISOBUTENE GROUPS AND THEIR HOMO-POLYMERS OR COPOLYMERS
MACRO-MONOMERES COMPORTANT DES GROUPES POLYISOBUTENE ET LEURS HOMO- OU COPOLYMERES

(30) Priorität: 05.08.2016 EP 16183034
(43) Veröffentlichungstag der Anmeldung: 12.06.2019
(73) Patentinhaber: BASF SE, 67056 Ludwigshafen am Rhein (DE)
(72) Erfinder: MISSKE, Andrea, 67056 Ludwigshafen (DE); THOMAS, Anja, 67056 Ludwigshafen (DE); FLECKENSTEIN, Christoph, 67056 Ludwigshafen (DE); FLEISCHHAKER, Friederike, 67065 Ludwigshafen (DE); CSIHONY, Szilard, 67056 Ludwigshafen (DE); GERST, Matthias, 67056 Ludwigshafen (DE); MOEBIUS, Stephan, 67056 Ludwigshafen (DE); LICHT, Ulrike, 67056 Ludwigshafen (DE); SCHWARZ, Andreas, 67056 Ludwigshafen (DE); NEUHAUS, Eric, 67056 Ludwigshafen (DE)
(74) Vertreter: BASF IP Association
(86) Internationale Anmeldenummer: PCT/EP2017/068842
(87) Internationale Veröffentlichungsnummer: WO 2018/024563

(56) Entgegenhaltungen:
- EP-A1- 0 832 960
- EP-A1- 2 762 506
- US-A- 5 731 379

## Beschreibung

Die vorliegende Erfindung beschreibt neue polyisobutengruppenhaltige Makromonomere und deren Homo- oder Copolymere.

Polyisobutengruppen tragende Makromonomere basierend auf z.B. Polyisobutenyl Bernsteinsäureanhydrid (PIBSA) sind bereits bekannt, z.B. aus WO 04/092227. Hier können jedoch bei der Herstellung der Polyisobutenyl Bernsteinsäureanhydride Strukturen mit Mehrfachfunktionalisierungen mit Bernsteinsäureanhydrid vorliegen, die in einer Folgereaktion mit (Meth)acrylsäurederivaten Monomere mit einer (Meth)Acrylsäure-Funktionalität > 1 liefern und somit zu einem Anteil im Reaktionsgemisch mit vernetzenden Makromonomerstrukturen führen. Des Weiteren entsteht bei der Umsetzung von PIBSA mit Alkoholen eine freie Säuregruppe, die zusätzliche die Hydrophobie der Makromonomere verringert und zu nachfolgenden Nebenreaktionen führen kann.

Polyisobutene, die mit einer -OH-Funktion terminiert sind, stellen wertvolle Zwischenprodukte zur Herstellung von monofunktionellen Makromeren bzw. Makromonomeren dar. Es ist das Verdienst von Kennedy und Ivan, als erste eine Syntheseroute zu solchen Verbindungen über Boranaddition publiziert zu haben (Ivan, Kennedy, Chang; J. Polym. Sci. Polym. Chem. Ed. 18, 3177 (1980)). Die Verwendung von Boranen zur Herstellung technischer Polymere ist zu aufwendig ist, siehe auch WO 14/090672.

Auch die Verwendung von Polyisobutenylalkoholen, die über Hydroformylierung hergestellt wurden, ist auf Grund der langen Reaktionszeit bei hohen Temperaturen in Anwesenheit von Rhodium- oder Cobalt-Katalysatoren sowie dem vergleichsweise niedrigen Funktionalisierungsgrad mit Alkoholfunktionalitäten für die Verwendung in der Makromonomerherstellung nicht geeignet, siehe z.B. EP 277345.

Ebenso erhält man durch Umsetzung von Polyisobuten beispielsweise zu Polyisobutenaminen (kommerziell erhältlich als Kerocom® PIBA der BASF) und dann weiter zu (Meth)acrylamiden Makromonomere. Diese enthalten allerdings hochsiedende Lösungsmittel (bis zu 35%) und sind daher für einige lösemittelfreie Anwendungen unbrauchbar.

Die Verwendung der auf den drei hier angegebenen Präkursoren basierenden Makromonomerstrukturen ist bereits in EP 1899393 beschrieben und verdeutlicht noch einmal den niedrigen Funktionalisierungsgrad (<80%) der daraus erhaltenen Makromonomere.

Aus K. Maenz, D. Stadermann, Angewandte Makromolekulare Chemie, 242 (1996) 183 - 197 ist es bekannt, Polyisobutengruppen tragende Phenole mit Methacryloylchlorid zu verestern Aus E.L. Malins, C. Waterson, C.R. Becer, J. Polym. Sc., Part A: Polymer Chemistry 2016, 54, 634 - 643 ist es bekannt, Polyisobutengruppen tragende Phenole mit Acryloylchlorid zu verestern und zu homo- oder copolymerisieren.

Aus WO 14/90672 ist es bekannt, Polyisobutengruppen tragende Phenole entweder zu ethoxylieren oder mit (Meth)acrylsäure zu verestern. Die erhaltenen Produkte können Verwendung finden in der Herstellung von Klebstoffen, Klebrohstoffen, Kraftstoff- und Schmierstoff-Additiven, als Elastomere oder als Grundbestandteil von Dichtungs- und Versiegelungsmassen.

Nachteilig an den so erhaltenen (Meth)acrylaten ist, dass für ihre Herstellung die Umsetzung des freien Phenols mit (Meth)acryloylchlorid oder -anhydrid erforderlich ist. Die Umsetzung mit Acryloylchlorid wird in WO 14/90672 auch explizit in einem Beispiel offenbart. Die in der Beschreibung der WO 14/90672 allgemein beschriebene Veresterung mit (Meth)acrylsäure oder Umesterung mit (Meth)acrylsäureestern liefert die Produkte in lediglich schlechten Ausbeuten. Ferner sind die so erhältlichen (Meth)acrylate in Gegenwart von Säuren, beispielsweise Säuregruppen tragenden Comonomeren, unter Polymerisationsbedingungen instabil und führen zu Inhibition der Polymerisation durch Freisetzung von Phenol und stark gefärbten Produktgemischen.

Aus EP 2762506 A1 sind (Meth)Acryloyl-terminierte Polyisobutenylpolymere bekannt. Erklärtes Ziel der EP 2762506 A1 ist es, vernetzungsfähige Makromoleküle herzustellen, bevorzugt mit einer Funktionalität von 2 oder 3. Die in den Beispielen explizit offenbarten Makromoleküle weisen eine Funktionalität von 1,9 oder höher auf. Dies bewirkt eine Vernetzung unter Polymerisationsbedingungen
Weiterhin werden die dort offenbarten Makromoleküle hergestellt durch eine kationische Polymerisation von entsprechend funktionalisierten Startermolekülen und die so erhaltenen mehrfach funktionalisierten und an jedem Kettenende ein Chloratom tragenden Polyisobutenpolymere werden mittels einer Friedel-Crafts-Alkylierung an ein (Meth)Acryloyl-substituiertes Phenol gekoppelt.
Diese Herstellungsweise bedingt, dass die Produkte herstellungsbedingt einen deutlichen Gehalt an Chlor aufweisen, der in den Beispielen mit 79 bis 85 ppm angegeben wird.

Aus EP 832960 A1 ist bekannt, Polyisobutenyl-substituierte Phenole mit Carbonaten oder alternativ mit Alkylenoxide zu alkoxylieren.

Als Produkte werden lediglich monoalkoxylierte Produkte beschrieben, jedoch keine mehrfach alkoxylierten, insbesondere wird nicht auf die Verteilung der mehrfach alkoxylierten Produkte nach diesem Verfahren eingegangen.

Aufgabe der vorliegenden Erfindung war es, einheitlich monofunktionelle Verbindungen zur Verfügung zu stellen, mit denen ein hoher Anteil an Struktureinheiten von Polyisobutengruppen tragenden Phenolen in Polymere eingeführt werden können. Diese Verbindungen sollen unter Polymerisationsbedingungen stabil und leichter erhältlich als die genannten Verbindungen aus dem Stand der Technik sein und einen niedrigeren Halogengehalt aufweisen, als er in den Beispielen der EP 2762506 A1 offenbart ist.

Die Aufgabe wurde gelöst durch Verbindungen (A) der Formel (I) 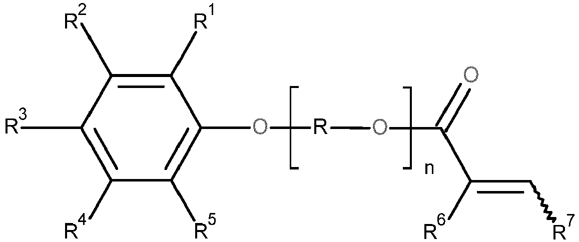 worin
R¹ bis R⁵ jeweils unabhängig voneinander ausgewählt sind aus der Gruppe bestehend aus Wasserstoff, C₁-C₂₀-Alkyl, C₁-C₂₀-Alkyloxy und C₈-C₃₅₀₀-Polyisobutyl und C₈-C₃₅₀₀-Polyisobutenyl,
R eine 2 bis 10, bevorzugt 2 bis 6 und besonders bevorzugt 2 bis 4 Kohlenstoffatome aufweisende Alkylengruppe,
R⁶ Wasserstoff oder Methyl,
R⁷ Wasserstoff, Methyl oder COOR⁸,
R⁸ Wasserstoff oder C₁-C₂₀-Alkyl und
n eine positive ganze Zahl von 1 bis 50
bedeuten,
mit der Maßgabe, dass
mindestens einer der Reste R¹ bis R⁵ einen C₈-C₃₅₀₀-Polyisobutyl oder C₈-C₃₅₀₀-Polyisobutenyl darstellt und von Polyisobuten abgeleitet ist, das einen Gehalt an terminal angeordneten Doppelbindungen von wenigstens 50 Mol-%, bezogen auf die Gesamtanzahl an Polyisobuten-Makromolekülen, aufweist.

Ein weiterer Gegenstand der Erfindung sind Polymere, enthaltend in einpolymerisierter Form mindestens eine Verbindung (A) der Formel (I) 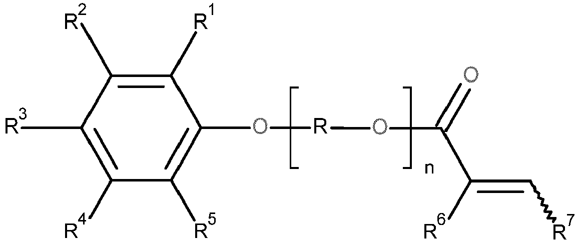 worin
R¹ bis R⁵ jeweils unabhängig voneinander ausgewählt sind aus der Gruppe bestehend aus Wasserstoff, C₁-C₂₀-Alkyl, C₁-C₂₀-Alkyloxy und C₈-C₃₅₀₀-Polyisobutyl und C₈-C₃₅₀₀-Polyisobutenyl,
R eine 2 bis 10, bevorzugt 2 bis 6 und besonders bevorzugt 2 bis 4 Kohlenstoffatome aufweisende Alkylengruppe,
R⁶ Wasserstoff oder Methyl,
R⁷ Wasserstoff, Methyl oder COOR⁸,
R⁸ Wasserstoff oder C₁-C₂₀-Alkyl und
n eine positive ganze Zahl von 1 bis 50
bedeuten,
mit der Maßgabe, dass
mindestens einer der Reste R¹ bis R⁵ einen C₈-C₃₅₀₀-Polyisobutyl oder C₈-C₃₅₀₀-Polyisobutenyl darstellt und von Polyisobuten abgeleitet ist, das einen Gehalt an terminal angeordneten Doppelbindungen von wenigstens 50 Mol-%, bezogen auf die Gesamtanzahl an Polyisobuten-Makromolekülen, aufweist
und optional mindestens ein Monomer (B) ausgewählt aus der Gruppe bestehend aus
   (B1) andere (Meth)acrylate als (A),
   (B2) andere Fumar- und Maleinsäurederivate als (A),
   (B3) Alkylvinylether
   (B4) Styrol und α-Methylstyrol
   (B5) Acrylnitril
   (B6) Vinylalkanoate und
   (B7) (Meth)acrylamide.

Darin bedeuten
C₁-C₂₀-Alkyl beispielsweise Methyl, Ethyl, *iso*-Propyl, n-Propyl, n-Butyl, *iso*-Butyl, *sek*-Butyl und *tert-Butyl,* n-Pentyl, 2-Pentyl, 3-Pentyl, 2-Methylbutyl, 3-Methylbutyl, 3-Methylbut-2-yl, 2-Methylbut-2-yl, 2,2-Dimethylpropyl, n-Hexyl, 2-Hexyl, 3-Hexyl, 2-Methylpentyl, 2-Methylpent-3-yl, 2-Methylpent-2-yl, 2-Methylpent-4-yl, 3-Methylpent-2-yl, 3-Methylpent-3-yl, 3-Methylpentyl, 2,2-Dimethylbutyl, 2,2-Dimethylbut-3-yl, 2,3-Dimethylbut-2-yl, 2, 3-Dimethylbutyl, 2-Ethylhexyl, n-Octyl, 2-Propylheptyl, n-Decyl, n-Dodecyl, n-Tetradecyl, n-Hexadecyl, n-Octadecyl und Eicosyl, bevorzugt Methyl, Ethyl, n-Butyl, *iso*-Propyl, *tert*-Butyl*,* 2-Ethylhexyl und 2-Propylheptyl und besonders bevorzugt Methyl, Ethyl, n-Butyl, *iso*-Propyl oder *tert*-Butyl*,* ganz besonders bevorzugt Methyl, Ethyl oder n-Butyl, insbesondere Methyl oderEthyl, speziell Methyl.

C₁-C₂₀-Alkyloxy beispielsweise mit C₁-C₂₀-Alkylgruppen substituierte Sauerstoffreste, bevorzugt Methoxy, Ethoxy, *iso*-Propyloxy, n-Propyloxy, n-Butyloxy, *iso*-Butyloxy, *sek*-Butyloxy und *tert-*Butyloxy, besonders bevorzugt Methoxy, Ethoxy, n-Butyloxy, *iso*-Propyloxy und *tert*-Butyloxy und ganz besonders bevorzugt Methoxy.

Eine 2 bis 10 Kohlenstoffatome aufweisende Alkylengruppe 1,2-Ethylen, 1,2-Propylen, 1,3-Propylen, 1,2-Butylen, 1,3-Butylen, 1,4-Butylen, 1-Phenyl-1,2-ethylen und 2-Phenyl-1,2-ethylen, bevorzugt 1,2-Ethylen, 1,2-Propylen und 1,2-Butylen.

C₈-C₃₅₀₀-Polyisobutyl und C₈-C₃₅₀₀-Polyisobutenyl durch Anlagerung von 8 bis 3500 Kohlenstoffatome enthaltendem Polyisobuten an Aromaten erhältliche Reste.

Dabei können die C₈-C₃₅₀₀-Polyisobutyl und C₈-C₃₅₀₀-Polyisobutenylreste auf prinzipiell jedem gängigen und kommerziell erhältlichen Polyisobuten basieren, welches in geeigneter Weise in die Synthese der Verbindungen der Formel (I) eingebracht wird. Ein solches Polyisobuten besitzt vorzugsweise ein zahlenmittleres Molekulargewicht Mₙ von mindestens 200. Bevorzugt sind Polyisobutene mit einem zahlenmittleren Molekulargewicht Mₙ im Bereich von mindestens 500, besonders bevorzugt von mindestens 700 und ganz besonders bevorzugt von mindestens 900 g/mol.

Es können Polyisobutene mit einem zahlenmittleren Molekulargewicht Mₙ im Bereich bis zu 50.000, bevorzugt bis zu 45.000, besonders bevorzugt bis zu 40.000 und ganz besonders bevorzugt bis zu 35.000 g/mol eingesetzt werden.

In einer bevorzugten Ausführungsform kann das zahlenmittlere Molekulargewicht Mₙ der Polyisobutene bis zu 30.000, besonders bevorzugt bis zu 20.000 und ganz besonders bevorzugt bis zu 10.000 g/mol betragen.

In einer weiteren bevorzugten Ausführungsform kann das zahlenmittlere Molekulargewicht Mₙ der Polyisobutene von 700 bis 2500 und besonders bevorzugt 900 bis 1100 g/mol betragen. Unter den Begriff "Polyisobuten" fallen im Sinne der vorliegenden Erfindung auch oligomere Isobutene wie dimeres, trimeres, tetrameres, pentameres, hexameres und heptameres Isobuten.

Die in die Verbindungen der Formel (I) eingebauten C₈-C₃₅₀₀-Polyisobutyl und C₈-C₃₅₀₀-Polyisobutenylreste leiten sich von sogenanntem "hochreaktiven" Polyisobuten ab. "Hochreaktive" Polyisobutene unterscheiden sich von anderen Polyisobutenen durch den Gehalt an terminal angeordneten Doppelbindungen. So enthalten hochreaktive Polyisobutene wenigstens 50 Mol-% terminal angeordnete Doppelbindungen, bezogen auf die Gesamtanzahl an Polyisobuten-Makromolekülen. Besonders bevorzugt sind Polyisobutene mit wenigstens 60 Mol-% und insbesondere mit wenigstens 80 Mol-% terminal angeordnete Doppelbindungen, bezogen auf die Gesamtanzahl an Polyisobuten-Makromolekülen. Bei den terminal angeordneten Doppelbindungen kann es sich sowohl um Vinyldoppelbindungen [-CH=C(CH₃)₂] (β-Olefin) als auch um Vinyliden-Doppelbindungen [-CH-C(=CH₂)-CH₃] (α-Olefin) handeln, bevorzugt α-Olefine. Außerdem weisen die im Wesentlichen homopolymere Polyisobutenylreste einheitliche Polymergerüste auf. Darunter werden im Rahmen der vorliegenden Erfindung solche Polyisobuten-Systeme verstanden, die zu wenigstens 85 Gew.-%, vorzugsweise zu wenigstens 90 Gew.-% und besonders bevorzugt zu wenigstens 95 Gew.-% aus Isobuteneinheiten der Wiederholungeinheit [-CH₂C(CH₃)₂-] aufgebaut sind.

In der vorliegenden Schrift wird unterschieden zwischen Polyisobutyl- und Polyisobutenylresten, wobei die Polyisobutylreste im wesentlichen frei von Doppelbindungen sind und die Polyisobutenylreste in der Regel mindestens eine Doppelbindung pro Rest tragen.

Die Brönstedt- oder Lewis-Säure katalysierte Anlagerung von Polyisobuten an Aromaten verläuft meist unter Reaktion der Doppelbindung und liefert daher im wesentlichen doppelbindungsfreie Polyisobutylreste. Dabei bedeutet "im wesentlichen doppelbindungsfrei", dass nicht mehr als 25% aller Reste eine Doppelbindung tragen, bevorzugt nicht mehr als 15%, besonders bevorzugt nicht mehr als 10% und ganz besonders bevorzugt nicht mehr als 5%.

Polyisobutylreste sind gegenüber den Polyisobutenylresten bevorzugt.

Ein weiteres bevorzugtes Merkmal der Polyisobutene, die den erfindungsgemäßen Verbindungen der Formel (I) zugrunde liegen können, ist, dass sie zu wenigstens 15 Gew.-%, insbesondere zu wenigstens 50 Gew.-%, vor allem zu wenigstens 80 Gew.-% mit einer tert.-Butylgruppe [-CH₂C(CH₃)₃] terminiert sind.
Weiterhin weisen die als Basis für die erfindungsgemäßen Verbindungen der Formel (I) vorzugsweise dienenden Polyisobutene vorzugsweise einen Polydispersitätsindex (PDI) von 1,05 bis 10, vorzugsweise von 1,05 bis 3,0, insbesondere von 1,05 bis 2,0 auf. Unter Polydispersität versteht man den Quotienten aus gewichtsmittlerem Molekulargewicht M_{w} und zahlenmittlerem Molekulargewicht Mₙ (PDI = M_{w}/Mₙ).

Unter als Basis für die erfindungsgemäßen Verbindungen der Formel (I) vorzugsweise dienenden Polyisobutenen werden im Sinne der vorliegenden Erfindungen auch alle durch kationische Polymerisation erhältlichen Polymerisate verstanden, die vorzugsweise wenigstens 60 Gew.-% Isobuten, besonders bevorzugt wenigstens 80 Gew.-%, vor allem wenigstens 90 Gew.-% und insbesondere wenigstens 95 Gew.-% Isobuten einpolymerisiert enthalten. Daneben können die Polyisobutene weitere Buten-isomere wie 1- oder 2-Buten sowie davon verschiedene olefinisch ungesättigte Monomere, die mit Isobuten unter kationischen Polymerisationsbedingungen copolymerisierbar sind, einpolymerisiert enthalten.

Als Isobuten-Einsatzstoffe für die Herstellung von Polyisobutenen, die als Basis für die erfindungsgemäßen Verbindungen der Formel (I) dienen können, eignen sich dementsprechend sowohl Isobuten selbst als auch isobutenhaltige C₄-Kohlenwasserstoffströme, beispielsweise C₄-Raffinate, C₄-Schnitte aus der Isobuten-Dehydrierung, C₄-Schnitte aus Steamcrackern, FCC-Crackern (FCC: Fluid Catalyzed Cracking), sofern sie weitgehend von darin enthaltenem 1,3-Butadien befreit sind. Besonders geeignete C₄-Kohlenwasserstoffströme enthalten in der Regel weniger als 500 ppm, vorzugsweise weniger als 200 ppm Butadien. Bei Einsatz von C₄-Schnitten als Einsatzmaterial übernehmen die von Isobuten verschiedenen Kohlenwasserstoffe die Rolle eines inerten Lösungsmittels.

Als mit Isobuten copolymerisierbare Monomere kommen Vinylaromaten wie Styrol und α-Methylstyrol, C₁-C₄-Alkylstyrole wie 2-, 3- und 4-Methylstyrol, sowie 4-tert.-Butylstyrol, Isoolefine mit 5 bis 10 C-Atomen wie 2-Methylbuten-1, 2-Methylpenten-1, 2-Methyl-hexen-1, 2-Ethylpenten-1, 2-Ethylhexen-1 und 2-Propylhepten-1 in Betracht.

Typische Polyisobutene, die als Basis für die erfindungsgemäßen Verbindungen der Formel (I), sind beispielsweise die Glissopal®-Marken der BASF SE, Ludwigshafen, z. B. Glissopal 1000, Glissopal 1300 und Glissopal 2300, sowie die Oppanol®-Marken der BASF SE, z.B. Oppanol® B10, B12 und B15.

In der Formel (I) haben die Reste folgende Bedeutungen:
R¹ bis R⁵ sind jeweils unabhängig voneinander ausgewählt sind aus der Gruppe bestehend aus Wasserstoff, C₁-C₂₀-Alkyl, C₁-C₂₀-Alkyloxy und C₈-C₃₅₀₀-Polyisobutyl und C₈-C₃₅₀₀-Polyisobutenyl.

Diejenigen der Reste R¹ bis R⁵, die einen Polyisobutyl oder Polyisobutenyl, bevorzugt einen Polyisobutylrest darstellen, weisen mindestens 8, bevorzugt mindestens 12, besonders bevorzugt mindestens 16, ganz besonders bevorzugt mindestens 20 und insbesondere mindestens 35 Kohlenstoffatome auf.

In einer bevorzugten Ausführungsform weisen sie mindestens 50 und besonders bevorzugt mindestens 60 Kohlenstoffatome auf.

In der Regel weisen die Polyisobutyl- oder Polyisobutenylreste bis zu 3500 Kohlenstoffatome auf, bevorzugt bis zu 3200, besonders bevorzugt bis zu 2200, ganz besonders bevorzugt bis zu 1500 und insbesondere bis zu 750.

In einer bevorzugten Ausführungsform weisen sie bis zu 200, besonders bevorzugt bis zu 100 und insbesondere bis zu 80 Kohlenstoffatome auf.

Dabei gilt die Maßgabe, dass mindestens einer der Reste R¹ bis R⁵ einen der genannten Polyisobutyl oder Polyisobutenyl darstellt, bevorzugt ein, zwei oder drei, besonders bevorzugt ein oder zwei und ganz besonders bevorzugt genau einer.

Diejenigen der Reste R¹ bis R⁵, die nicht einen der genannten Polyisobutyl- oder Polyisobutenylreste darstellen, sind bevorzugt ausgewählt aus der Gruppe bestehend aus Wasserstoff, Methyl, iso-Propyl, tert.-Butyl, Methoxy, tert.-Butyloxy, besonders bevorzugt ausgewählt aus der Gruppe bestehend aus Wasserstoff, Methyl, tert.-Butyl, und ganz besonders bevorzugt handelt es sich bei ihnen um Wasserstoff.

In einer bevorzugten Ausführungsform ist mindestens einer der Reste R¹, R³ und R⁵ ein Polyisobutyl- oder Polyisobutenylrest und die anderen nicht, besonders bevorzugt ist R³ ein Polyisobutyl- oder Polyisobutenylrest und die anderen nicht.

Bei R handelt es sich um eine 2 bis 10, bevorzugt 2 bis 6 und besonders bevorzugt 2 bis 4 Kohlenstoffatome aufweisende Alkylengruppe, bevorzugt um 1,2-Ethylen, 1,2-Propylen, 1,3-Propylen, 1,2-Butylen, 1,4-Butylen, 1-Phenyl-1,2-ethylen oder 2-Phenyl-1,2-ethylen, besonders bevorzugt um 1,2-Ethylen, 1,2-Propylen oder 1,2-Butylen und ganz besonders bevorzugt um 1,2-Ethylen.

Bei n handelt es sich um eine positive ganze Zahl von 1 bis 50, bevorzugt von 1 bis 30, besonders bevorzugt von 1 bis 20, ganz besonders bevorzugt von 1 bis 10, insbesondere von 1 bis 5 und speziell um 1.

R⁶ ist Wasserstoff oder Methyl, bevorzugt Methyl.

R⁷ ist Wasserstoff, Methyl oder COOR⁸, bevorzugt Wasserstoff oder COOR⁸ und besonders bevorzugt Wasserstoff.

R⁸ ist Wasserstoff oder C₁-C₂₀-Alkyl, bevorzugt Wasserstoff, Methyl, Ethyl, n-Butyl oder 2-Ethylhexyl, besonders bevorzugt Wasserstoff oder Methyl und ganz besonders bevorzugt Wasserstoff.

Es ist zu beachten, dass es sich bei den Verbindungen der Formel (I) um Reaktionsgemische mit einer Verteilung der Produktzusammensetzung je nach Reaktionsbedingungen handelt. So ist die Kettenlänge der Polyisobutyl- oder Polyisobutenylreste einer Verteilung um einen statistischen Mittelwert unterworfen, ebenso das Substitutionsmuster der Polyisobutyl- oder Polyisobutenylreste am aromatischen Ring sowie gegebenenfalls die Länge der Kette -[-R-O-]ₙ-, die ebenfalls um einen statistischen Mittelwert n verteilt sein kann. So nimmt der Wert für n für jede einzelne Verbindung der Formel (I) positive ganzzahlige Zahlen an, kann für das Reaktionsgemisch im statistischen Mittel auch nicht-ganzzahlige Werte annehmen.

In einer bevorzugten Ausführungsform hat das Reaktionsgemisch eine mittlere Funktionalität an α,β-ungesättigen Carbonylfunktionen, bevorzugt an (Meth)Acrylatgruppen von nicht mehr als 1,2, besonders bevorzugt von nicht mehr als 1,1, ganz besonders bevorzugt von nicht mehr als 1,05.

Die mittlere Funktionalität beträgt in der Regel mindestens 0,8, bevorzugt mindestens 0,9 und ganz besonders bevorzugt mindestens 0,95.

Der Funktionalisierungsgrad kann mittels quantitativer 1H-NMR Spektroskopie bestimmt werden. Dabei werden die üblicherweise leicht zuordenbaren und erkennbaren sowie nicht von anderen Signalen überlagerten Signale der Protonen am Aromaten und die Signale der Protonen der polymerisierbaren Doppelbindung integriert und zueinander ins Verhältnis gesetzt.

Die Herstellung der Verbindungen (A) kann beispielsweise durch Umsetzung der freien Phenole der Formel 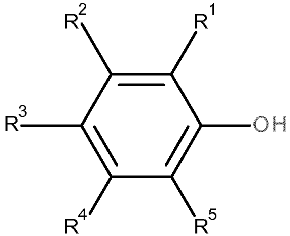 mit Alkylenoxiden oder Alkylencarbonaten der Formel 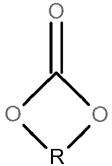 gefolgt von einer Decarboxylierung und anschließender Veresterung mit (Meth)acrylsäure, Crotonsäure, Fumarsäure, Maleinsäure oder Maleinsäureanhydrid oder Umesterung mit (Meth)acrylsäureestern, Crotonsäureestern, Fumarsäureestern oder Maleinsäureestern erfolgen.

Die Herstellung der freien Phenole ist aus dem eingangs zitierten Stand der Technik bekannt, beispielsweise der WO 02/059237 oder WO 14/90672 und der darin zitierten Literatur.

Während die EP 2762506 A1 von chlorierten Startermolekülen ausgehend eine kationische Polymerisation durchführt und zu an jedem Kettenende ein Chloratom tragenden Polyisobutenpolymeren gelangt, die an ein Phenol gekoppelt werden, stellt es eine bevorzugte Ausführungsform der vorliegenden Erfindung dar, ein eine Doppelbindung tragendes Polyisobuten mit einer Lewis-Säure per Friedel-Crafts-Alkylierung an ein Phenol zu binden. Somit weisen die Verbindungen gemäß der EP 2762506 A1 verfahrensbedingt einen wesentlich höheren Halogengehalt auf, als diese erfindungsgemäß bevorzugte Ausführungsform der Reaktion von einem eine Doppelbindung tragendem Polyisobuten mit Phenol in Gegenwart einer Lewis-Säure.

Bevorzugt werden auf diesem Wege Reaktionsgemische mit einem Halogengehalt, bevorzugt einem Fluorgehalt, von nicht mehr als 70 Gew.ppm erhalten, besonders bevorzugt nicht mehr als 50 Gew.ppm, ganz besonders bevorzugt nicht mehr als 40 Gew.ppm, insbesondere nicht mehr als 30 Gew.ppm und speziell nicht mehr als 20 Gew.ppm. Es ist sogar möglich, Reaktionsgemische mit einem Halogengehalt, bevorzugt einem Fluorgehalt, von nicht mehr als 10 Gew.ppm oder sogar nicht mehr als 5 Gew.ppm zu erhalten.

Die Herstellung der alkoxylierten Produkte erfolgt in der Regel durch Umsetzung der freien Phenole mit dem jeweiligen Epoxid in in der gewünschten Stöchiometrie in Gegenwart eines Katalysators, beispielsweise eines Alkali- oder Erdalkalihydroxids, -oxids, -carbonats oderhydrogencarbonats, bevorzugt eines Alkalihydroxids, besonders bevorzugt von Kaliumhydroxid. Mögliche Durchführungsformen finden sich in Houben-Weyl, Methoden der Organischen Chemie, 4. Auflage, 1979, Thieme Verlag Stuttgart, Hrsg. Heinz Kropf, Band 6/1a, Teil 1, Seiten 373 bis 385. Eine bevorzugte Ausführungsform findet sich in der WO 02/059237 A2, dort besonders von Seite 9, Zeile 12 bis Seite 10, Zeile 21, was hiermit durch Bezugnahme Bestandteil der vorliegenden Offenbarung sei.

Die Herstellung der alkoxylierten Produkte kann auch mit Hilfe von Multimetallcyanidverbindungen, häufig auch als DMC-Katalysatoren bezeichnet, erfolgen, die seit langem bekannt und vielfach in der Literatur beschrieben sind, beispielsweise in US 3,278,457 und in US 5,783,513.

Die DMC-Katalysatoren werden üblicherweise hergestellt, indem ein Metallsalz mit einer Cyanometallatverbindung umgesetzt wird. Zur Verbesserung der Eigenschaften der DMC-Katalysatoren ist es üblich, während und/oder nach der Umsetzung organische Liganden zuzusetzen. Eine Beschreibung der Herstellung von DMC-Katalysatoren findet sich beispielsweise in US-A 3,278,457.

Typische DMC-Katalysatoren weisen die folgende allgemeine Formel auf:

M¹ₐ[M²(CN)_{b}]_{d}•fM¹ⱼXₖ•h(H₂O) eL•zP

worin
M¹ ein Metallion, ausgewählt aus der Gruppe, enthaltend Zn²⁺, Fe²⁺, Fe³⁺, Co²⁺, Co³⁺, Ni²⁺, Mn²⁺, Sn²⁺, Sn⁴⁺, Pb²⁺, Al³⁺, Sr²⁺, Cr³⁺, Cd²⁺, Cu²⁺, La³⁺, Ce³⁺, Ce⁴⁺, Eu³⁺, Mg²⁺, Ti⁴⁺, Ag⁺, Rh²⁺, Ru²⁺, Ru³⁺, Pd²⁺
M² ein Metallion, ausgewählt aus der Gruppe, enthaltend Fe²⁺, Fe³⁺, Co²⁺, Co³⁺, Mn²⁺, Mn³⁺, Ni²⁺, Cr²⁺, Cr³⁺, Rh³⁺, Ru²⁺, Ir³⁺
bedeuten und M¹ und M² gleich oder verschieden sind,
X ein Anion, ausgewählt aus der Gruppe, enthaltend Halogenid, Hydroxid, Sulfat, Hydrogensulfat, Carbonat, Hydrogencarbonat, Cyanid, Thiocyanat, Isocyanat, Cyanat, Carboxylat, Oxalat, Nitrat oder Nitrit (NO₂⁻) oder eine Mischung von zwei oder mehr der voranstehend genannten Anionen oder eine Mischung von einem oder mehreren der voranstehend genannten Anionen mit einer der ungeladenen Spezies ausgewählt aus CO, H₂O und NO,
Y ein von X verschiedenes Anion, ausgewählt aus der Gruppe, enthaltend, Halogenid, Sulfat, Hydrogensulfat, Disulfat, Sulfit, Sulfonat (=RSO₃⁻ mit R=C₁-C₂₀-Alkyl, C₆-C₁₂-Aryl, C₁-C₂₀-Alkylaryl), Carbonat, Hydrogencarbonat, Cyanid, Thiocyanat, Isocyanat, Isothiocyanat, Cyanat, Carboxylat, Oxalat, Nitrat, Nitrit, Phosphat, Hydrogenphosphat, Dihydrogenphosphat, Diphosphat, Borat, Tetraborat, Perchlorat, Tetrafluoroborat, Hexafluorophosphat, Tetraphenylborat ist,
L ein mit Wasser mischbarer Ligand, ausgewählt aus der Gruppe, enthaltend Alkohole Aldehyde, Ketone, Ether, Polyether, Ester, Polyester, Polycarbonat, Harnstoffe, Amide, Nitrile, und Sulfide oder deren Mischungen,
P ein organischer Zusatzstoff, ausgewählt aus der Gruppe, enthaltend Polyether, Polyester, Polycarbonate, Polyalkylenglykolsorbitanester, Polyalkylenglykolglycidylether, Polyacrylamid, Poly(acrylamid-co-acrylsäure), Polyacrylsäure, Poly(acrylamid-co-maleinsäure), Polyacrylnitril, Polyalkylacrylate, Polyalkylmethacrylate, Polyvinylmethylether, Polyvinylethylether, Polyvinylacetat, Polyvinylalkohol, Poly-N-vinylpyrrolidon, Poly(N-vinylpyrrolidon-co-acrylsäure), Polyvinylmethylketon, Poly(4-vinylphenol), Poly(acrylsäure-co-styrol), Oxazolinpolymere, Polyalkylenimine, Maleinsäure und Maleinsäureanhydridcopolymer, Hydroxyethylcellulose, Polyacetate, ionische oberflächen und grenzflächenaktive Verbindungen, Gallensäure oder deren Salze, Ester oder Amide, Carbonsäureester mehrwertiger Alkohole und Glycoside.
   sowie
a, b, d, g, n, r, s, j, k und t ganze oder gebrochene Zahlen größer null,
e, f, h und z ganze oder gebrochene Zahlen größer gleich null sind,
   wobei
a, b, d, g, n, j, k und r sowie s und t so ausgewählt sind, dass die Elektroneutralität gewährleistet ist,
M³ Wasserstoff oder ein Alkali- oder Erdalkalimetall bedeuten, sowie
M⁴ Alkalimetallionen oder ein Ammoniumion (NH₄⁺) oder Alkylammoniumion (R₄N⁺, R₃NH⁺, R₂NH₂⁺, RNH₃⁺ mit R= C1-C20-Alkyl) bedeuten.

In einer besonders bevorzugten Ausführungsform der Erfindung ist M¹ Zn²⁺ und M² Co³⁺ oder Co²⁺.

Die Metalle M¹ und M² sind insbesondere dann gleich, wenn sie Kobalt, Mangan oder Eisen sind.

In einer bevorzugten Ausführungsform findet die Alkoxylierung so statt, dass das Polyisobutengruppen tragende Phenol mit einem Alkylenoxid, bevorzugt ausgewählt aus der Gruppe bestehend aus Ethylenoxid, Propylenoxid, Butylenoxid, Styroloxid und Mischungen davon, in Gegenwart starker Basen, bevorzugt Alkali- und Erdalkalisalze von C₁-C₄-Alkoholen, Alkalihydroxide und Erdalkalihydroxide, Brönstedtsäuren oder Lewis Säuren, wie AlCl₃, BF₃ etc. umgesetzt wird. Bevorzugt sind Alkali- und Erdalkalisalze von C₁-C₄-Alkoholen, Alkalihydroxide und Erdalkalihydroxide, besonders bevorzugt Natriummethanolat, Kaliummethanolat, Kalium tert.butanolat, Natriumhydroxid und Kaliumhydroxid, ganz besonders bevorzugt Kalium tert.butanolat und Kaliumhydroxid. Die Einsatzmenge der Katalysatoren liegt im Allgemeinen in einem Bereich von etwa 0,01 bis 1 Gew.-%, insbesondere 0,05 bis 0,5 Gew.-%, bezogen auf die Gesamtmenge der Edukte.

Die Alkoxylierung erfolgt vorzugsweise bei Temperaturen im Bereich von etwa 70 bis 200 °C, bevorzugt etwa 100 bis 160 °C. Der Druck liegt vorzugsweise zwischen Umgebungsdruck und 150 bar, insbesondere im Bereich von 3 bis 30 bar. Gewünschtenfalls kann das Alkylenoxid eine Inertgasbeimischung, z. B. von etwa 5 bis 60 %, enthalten.

Das Umsetzungsprodukt kann nach üblichen, dem Fachmann bekannten Verfahren, wie z. B. durch Ausgasen flüchtiger Bestandteile im Vakuum oder durch Strippen mit einem unter den Bedingungen inerten Gas und gegebenenfalls durch Filtration aufgearbeitet werden.

Der Katalysator kann auch durch eine Behandlung des Produkts mit Magnesiumsilikaten (beispielsweise Ambosol®) und anschließender Filtration abgetrennt werden.

Die Reste des Katalysators können im erhaltenen Produkt verbleiben, oder mit einer Säure, bevorzugt Salzsäure, Schwefelsäure, Phosphorsäure oder Essigsäure, neutralisiert werden, wobei die Salze anschließend bevorzugt durch beispielsweise eine Wäsche oder per Ionentauscher entfernt werden können. Gegebenenfalls kann eine Teilneutralisation erfolgen und das Produkt ohne weitere Abtrennung der Salze weiterverwendet werden.

Die Umsetzung mit Alkylencarbonaten, bevorzugt 1,2-Ethylencarbonat, 1,3-Propylencarbonat und 1,2-Propylencarbonat, erfolgt in der Regel in einer Stöchiometrie von 1 bis 2 mol Carbonat: 1 mol Phenol, bevorzugt 1,05 - 1,8: 1, besonders bevorzugt 1,1 - 1,7:1, ganz besonders bevorzugt 1,2 - 1,5:1 mol/mol.

Als Katalysatoren für die Umsetzung mit Alkylencarbonaten können anorganische Salze, tertiäre Amine, Triphenylphosphin, Lithiumhydrid und organische Stannate eingesetzt werden.

Das anorganische Salz weist bevorzugt mindestens ein Anion auf ausgewählt aus der Gruppe bestehend aus Carbonat (CO₃²⁻), Oxid (O²⁻), Hydroxid (OH⁻), Hydrogencarbonat (HCO₃⁻), Phosphat (PO₄³⁻) Hydrogenphosphat (HPO₄²⁻) und Dihydrogenphosphat (H₂PO₄⁻). Bevorzugt sind Oxid, Hydroxid und Phosphat oder Mischungen hieraus, besonders bevorzugt ist Phosphat. Das anorganische Salz weist bevorzugt mindestens ein Kation auf ausgewählt aus der Gruppe bestehend aus Alkalimetallen, Erdalkalimetallen, Tetraalkylammonium, Ammonium, Cer, Eisen, Mangan, Chrom, Molybdän, Kobalt, Nickel oder Zink. Bevorzugt sind Alkali- und Erdalkalimetalle und besonders bevorzugt sind Lithium, Natrium, Kalium oder Calcium. Besonders bevorzugte anorganische Salze einschließlich ihrer Hydrate sind LiOH, Li₃PO₄, Na₃PO₄, K₃PO₄, Na₂CO₃, K₂CO₃ und CaO, ganz besonders bevorzugt ist K₃PO₄.

Denkbar, wenn auch weniger bevorzugt sind Tetraalkylammoniumhalogenide, bevorzugt Tetra-C₁-C₂₀-alkyl ammoniumhalogenide und besonders bevorzugt Tetra-C₁-C₄-alkyl ammoniumhalogenide, unter den Halogeniden bevorzugt Chloride, Bromide und lodid, besonders bevorzugt Chloride oder Bromide, und ganz besonders bevorzugt Chloride, und bevorzugt tertiäre Amine wie z.B. Triethylamin und 2-Methylimidazol ganz besonders bevorzugt 2-Methylimidazol.

Es kann vorteilhaft sein, den Katalysator nach Beendigung der Reaktion im Reaktionsgemisch zu belassen und in der nachfolgenden Reaktion zu verwenden, siehe unten.

Es ist jedoch auch möglich, den Katalysator aus dem Reaktionsgemisch zu entfernen, beispielsweise durch eine wäßrige Extraktion des Reaktionsgemischs oder durch eine Filtration. Die Wäsche kann beispielsweise in einem Rührbehälter oder in einer anderen herkömmlichen Apparatur, z.B. in einer Kolonne oder Mixer-Settler-Apparatur durchgeführt werden.

Verfahrenstechnisch können für eine Wäsche im erfindungsgemäßen Verfahren alle an sich bekannten Extraktions- und Waschverfahren und -apparate eingesetzt werden, z.B. solche, die in Ullmann's Encyclopedia of Industrial Chemistry, 6th ed., 1999 Electronic Release, Kapitel "Liquid - Liquid Extraction - Apparatus" beschrieben sind. Beispielsweise können dies ein- oder mehrstufige, bevorzugt einstufige Extraktionen sowie Extraktionen in Gleich- oder Gegenstromfahrweise sein.

Eine Abtrennung vom heterogenen Katalysator erfolgt in der Regel durch Filtration, Elektrofiltration, Absorption, Zentrifugation oder Dekantieren, vorzugsweise durch Filtration. Der abgetrennte heterogene Katalysator kann anschließend für weitere Reaktionen eingesetzt werden.

Die Filtration kann beispielsweise mit einer Druckfilternutsche durchgeführt werden. Verfahrenstechnisch können für eine Filtration im erfindungsgemäßen Verfahren alle an sich bekannten Filtrationsverfahren und -apparate eingesetzt werden, z.B. solche, die in Ullmann's Encyclopedia of Industrial Chemistry, 7th ed, 2013 Electronic Release, Kapitel: Filtration, 1. Fundamentals und Filtration 2. Equipment, beschrieben sind. Beispielsweise können dies Kerzenfilter, Filterpressen, Tellerdruckfilter, Beutelfilter oder Trommelfilter sein. Vorzugsweise werden Kerzenfilter oder Tellerdruckfilter eingesetzt.

Die Filtration kann mit oder ohne Filterhilfsmittel durchgeführt werden. Geeignete Filterhilfsmittel sind Filterhilfsmittel basierend auf Kieselgur, Perlit und Cellulose.

Geeignete Zentrifugen und auch Separatoren sind dem Experten bekannt. Verfahrenstechnisch können für eine Zentrifugation im erfindungsgemäßen Verfahren alle an sich bekannten Zentrifugationsverfahren und -apparate eingesetzt werden, z.B. solche, die in Ullmann's Encyclopedia of Industrial Chemistry, 7th ed, 2013 Electronic Release, Kapitel: Centrifuges, Filtering und Centrifuges, Sedimenting, beschrieben sind.

Die Umsetzung erfolgt in der Regel bei einer Temperatur von 70 bis 200 °C, besonders bei 100 bis 190 und ganz besonders bevorzugt 150 bis 170 °C.

Es ist ebenfalls möglich, die Reaktionstemperatur im Verlauf der Reaktion zu steigern um nach erfolgter Ringöffnung des Carbonats die Decarboxylierung zu beschleunigen.

Die Umsetzung ist in der Regel innerhalb von 24 Stunden beendet, bevorzugt innerhalb von 1 bis 20 Stunden, besonders bevorzugt in 2 bis 16 Stunden, ganz besonders bevorzugt 3 bis 12 Stunden.
Die Umsetzung kann ohne Lösungsmittel durchgeführt werden oder in Anwesenheit eines solchen, beispielsweise Ether, Ketone oder Kohlenwasserstoffe, bevorzugt ohne Lösungsmittel.

Unter den Kohlenwasserstoffen sind die aromatischen Lösungsmittel mit einem Siedebereich bei dem jeweils anliegenden Druck oberhalb der Reaktionstemperatur bevorzugt. Beispiele dafür sind solche, die überwiegend aromatische C₇- bis C₁₄-Kohlenwasserstoffe umfassen und einen Siedebereich von 110 bis 300 °C umfassen können, besonders bevorzugt sind Toluol, o-, m- oder p-Xylol, Trimethylbenzolisomere, Tetramethylbenzolisomere, Ethylbenzol, Cumol, Tetrahydronaphthalin und solche enthaltende Gemische.

Weiter Beispiele sind die Solvesso®-Marken der Firma ExxonMobil Chemical, besonders Solvesso® 100 (CAS-Nr. 64742-95-6, überwiegend C₉ und C₁₀-Aromaten, Siedebereich etwa 154 - 178 °C), 150 (Siedebereich etwa 182 - 207 °C) und 200 (CAS-Nr. 64742-94-5), sowie die Shellsol®-Marken der Firma Shell, Caromax® (z.B. Caromax® 18) der Firma Petrochem Carless und Hydrosol der Firma DHC (z.B. als Hydrosol® A 170). Kohlenwasserstoffgemische aus Paraffinen, Cycloparaffinen und Aromaten sind auch unter den Bezeichnungen Kristallöl (beispielsweise Kristallöl 30, Siedebereich etwa 158 - 198 °C oder Kristallöl 60: CAS-Nr. 64742-82-1), Testbenzin (beispielsweise ebenfalls CAS-Nr. 64742-82-1) oder Solventnaphtha (leicht: Siedebereich etwa 155 - 180 °C, schwer: Siedebereich etwa 225 - 300 °C) im Handel erhältlich. Der Aromatengehalt derartiger Kohlenwasserstoffgemische beträgt in der Regel mehr als 90 Gew%, bevorzugt mehr als 95, besonders bevorzugt mehr als 98 und ganz besonders bevorzugt mehr als 99 Gew%. Es kann sinnvoll sein, Kohlenwasserstoffgemische mit einem besonders verringerten Gehalt an Naphthalin einzusetzen.

Es stellt eine bevorzugte Ausführungsform der vorliegenden Erfindung dar, das freie Phenol zunächst mit einem Carbonat, bevorzugt Ethylencarbonat, umzusetzen und anschließend das so erhältliche, eine Gruppe -R-O-H tragende Reaktionsprodukt mit einem Alkylenoxid oder Alkylenoxidgemisch umzusetzen, bis die gewünschten Anzahl n in der Struktureinheit -[-R-O-]ₙ-erreicht ist.

Dies hat den Vorteil, dass eine engere Molekulargewichtsverteilung erhalten wird.

Ein weiterer Vorteil besteht darin, dass solche Produkte zugänglich sind, in denen sich in der Struktureinheit -[-R-O-]ₙ- das erste Struktureinheit -[-R-O-]- von der zweiten bis n-ten Struktureinheit -[-R-O-]- unterscheiden kann.

Die Veresterung mit (Meth)acrylsäure, Crotonsäure, Fumarsäure, Maleinsäure oder Maleinsäureanhydrid oder Umesterung mit (Meth)acrylsäureestern, Crotonsäureestern, Fumarsäureestern oder Maleinsäureestern des alkoxylierten Phenols der Formel 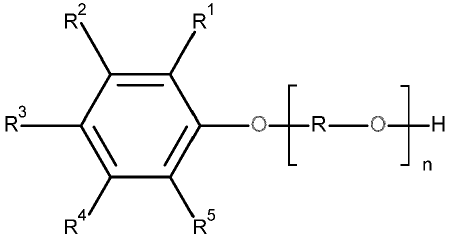 erfolgt in der Regel wie folgt:
Dazu werden das alkoxylierte Phenol und (Meth)acrylsäure, Crotonsäure, Fumarsäure, Maleinsäure oder Maleinsäureanhydrid in einem molaren Verhältnis von Säure zu Phenol von in der Regel mindestens 1 : 1, bevorzugt mindestens 1,05:1, besonders bevorzugt mindestens 1,1:1, ganz besonders bevorzugt mindestens 1,25:1 und insbesondere mindestens 1,5:1 umgesetzt. In der Regel ist ein molares Verhältnis von nicht mehr als 5:1 erforderlich, bevorzugt nicht mehr als 4:1, besonders bevorzugt nicht mehr als 3:1 und ganz besonders bevorzugt nicht mehr als 2:1.

Einsetzbare Veresterungskatalysatoren sind Schwefelsäure, Aryl- oder Alkylsulfonsäuren oder Gemische davon. Beispiele für Arylsulfonsäuren sind Benzolsulfonsäure, para-Toluolsulfonsäure oder Dodecylbenzolsulfonsäure, Beispiele für Alkylsulfonsäuren sind Methansulfonsäure, Ethansulfonsäure oder Trifluormethansulfonsäure. Auch stark saure lonentauscher oder Zeolithe sind als Veresterungskatalysatoren einsetzbar. Bevorzugt sind Schwefelsäure und Sulfonsäuren, besonders bevorzugt Methansulfonsäure und para-Toluolsulfonsäure.

Diese werden in der Regel in einer Menge von 0,1 - 5 Gew.-%, bezogen auf das Veresterungsgemisch, eingesetzt, bevorzugt 0,5 - 5, besonders bevorzugt 1 - 4 und ganz besonders bevorzugt 2 - 4 Gew.-%.

Falls erforderlich kann der Veresterungskatalysator aus dem Reaktionsgemisch mit Hilfe eines Ionenaustauschers entfernt werden. Der Ionenaustauscher kann dabei direkt in das Reaktionsgemisch gegeben und anschließend abfiltriert oder das Reaktionsgemisch kann über eine lonenaustauscherschüttung geleitet werden.

Bevorzugt wird der Veresterungskatalysator im Reaktionsgemisch belassen. Handelt es sich jedoch bei dem Katalysator um einen lonentauscher, so wird dieser bevorzugt entfernt, beispielsweise durch Filtration.

Bevorzugt wird der Ver- oder Umesterung ein an sich bekannter Polymerisationsinhibitor in einer Gesamtmenge von 0,01 - 5 Gew.-%, bezogen auf das Veresterungsgemisch, zugesetzt, bevorzugt 0,02 - 3, besonders bevorzugt 0,05 - 2 Gew.-%, ganz besonders bevorzugt 0,1 bis 1 und insbesondere 0,3 bis 1 Gew.-%.

Beispiele für derartige Polymerisationsinhibitoren sind beispielsweise in der WO 2005/082828 A1 aufgeführt, dort besonders von Seite 15, Zeile 27 bis Seite 19, Zeile 18, was hiermit per Bezugnahme Bestandteil der vorliegenden Offenbarung sei.

Zur Wirksamkeit der Polymerisationsinhibitoren kann es vorteilhaft sein, ein sauerstoffhaltiges Gas, beispielsweise Luft oder Magerluft, über oder bevorzugt durch das Reaktionsgemisch zu leiten.

Das bei der Reaktion entstehende Reaktionswasser kann während oder nach der Veresterung abdestilliert werden, wobei dieser Vorgang durch ein mit Wasser ein Azeotrop bildendes Lösungsmittel unterstützt werden kann.

Als Lösungsmittel zur azeotropen Entfernung des Reaktionswassers, falls gewünscht, eignen sich vor allem aliphatische, cycloaliphatische und aromatische Kohlenwasserstoffe oder Gemische davon.

Vorzugsweise kommen n-Pentan, n-Hexan, n-Heptan, Cyclohexan, Methylcyclohexan, Benzol, Toluol oder Xylol zur Anwendung. Besonders bevorzugt sind Cyclohexan, Methylcyclohexan und Toluol.

Bevorzugt ist die Durchführung der Veresterung in Gegenwart eines Lösungsmittels.

Die eingesetzte Menge an Lösungsmittel beträgt 10 - 200 Gew.-%, vorzugsweise 20 - 100 Gew.-%, besonders bevorzugt 30 bis 100 Gew.-% bezogen auf die Summe von Phenol und Säure.

Falls das im Reaktionsgemisch enthaltene Wasser nicht über ein azeotropbildendes Lösungsmittel entfernt wird, so ist es möglich, dieses über Strippen mit einem inerten Gas, bevorzugt einem sauerstoffhaltigen Gas, besonders bevorzugt mit Luft oder Magerluft zu entfernen.

Die Reaktionstemperatur der Veresterung liegt allgemein bei 40 - 160 °C, bevorzugt 60 - 140°C und besonders bevorzugt 80 - 120°C. Die Temperatur kann im Reaktionsverlauf gleichbleiben oder ansteigen, bevorzugt wird sie im Reaktionsverlauf angehoben. In diesem Fall ist die Endtemperatur der Veresterung um 5 - 30 °C höher als die Anfangstemperatur.

Falls ein Lösungsmittel eingesetzt wird, so kann dieses nach Beendigung der Reaktion vom Reaktionsgemisch abdestilliert werden.

Das Reaktionsgemisch wird gegebenenfalls in einem Waschapparat mit Wasser oder einer 5-30 Gew.-%igen, bevorzugt 5-20, besonders bevorzugt 5-15 Gew.-%igen Kochsalz-, Kaliumchlorid-, Ammoniumchlorid-, Natriumsulfat- oder Aluminiumsulfatlösung, bevorzugt Kochsalzlösung behandelt.

Das Mengenverhältnis Reaktionsgemisch:Waschflüssigkeit beträgt in der Regel 1:0,1-1, bevorzugt 1: 0,2-0,8, besonders bevorzugt 1:0,3-0,7.

Die Wäsche kann beispielsweise in einem Rührbehälter oder in einer anderen herkömmlichen Apparatur, z. B. in einer Kolonne oder Mixer-Settler-Apparatur durchgeführt werden. verfahrenstechnisch können für eine Wäsche im erfindungsgemäßen Verfahren alle an sich bekannten Extraktions- und Waschverfahren und -apparate eingesetzt werden, z. B. solche, die in Ullmann's Encyclope- dia of Industrial Chemistry, 6th ed, 1999 Electronic Release, Kapitel: Liquid - Liquid Extraction - Apparatus, beschrieben sind. Beispielsweise können dies ein- oder mehrstufige, bevorzugt einstufige Extraktionen, sowie solche in Gleich- oder Gegenstromfahrweise sein.

Die Vorwäsche wird bevorzugt dann eingesetzt, wenn Metallsalze, bevorzugt Kupfer oder Kupfersalze als Inhibitoren (mit)verwendet werden.

Die organische Phase der Vorwäsche, die noch geringe Mengen an Katalysator und die Hauptmenge an überschüssiger (Meth)acrylsäure enthält, wird mit einer 5-25, bevorzugt 5-20, besonders bevorzugt 5-15 Gew.-% wässrigen Lösung einer Base, wie z. B. Natronlauge, Kalilauge, Natriumhydrogencarbonat, Natriumcarbonat, Kaliumhydrogencarbonat, Calciumhydroxid, Ammoniakwasser oder Kaliumcarbonat, der gegebenenfalls 5-15 Gew.-% Kochsalz, Kaliumchlorid, Ammoniumchlorid oder Ammoniumsulfat zugesetzt sein können, bevorzugt mit Natronlauge oder Natronlauge-Kochsalz-Lösung neutralisiert.

Die Zugabe der Base erfolgt in einer Weise, dass die Temperatur im Apparat nicht über 35°C ansteigt, bevorzugt zwischen 20 und 35°C beträgt und der pH-Wert 10-14 beträgt. Die Abfuhr der Neutralisationswärme erfolgt gegebenenfalls durch Kühlung des Behälters mit Hilfe von innenliegenden Kühlschlangen oder über eine Doppelwandkühlung.
Das Mengenverhältnis Reaktionsgemisch:Neutralisationsflüssigkeit beträgt in der Regel 1:0,1-1, be- vorzugt 1:0,2-0,8, besonders bevorzugt 1:0,3-0,7.

Hinsichtlich der Apparatur gilt das oben Gesagte.

Optional kann zur Entfernung von Base- oder Salzspuren aus dem neutralisierten Reaktionsgemisch eine Nachwäsche vorteilhaft sein, welche analog zur Vorwäsche durchgeführt werden kann.

Alternativ kann das Reaktionsgemisch durch Zugabe einer 20-50%igen wässrigen Natronlauge, bevorzugt 25-35%, besonders bevorzugt 30% und anschließender Zugabe eines mineralischen, Wasser absorbierenden Stoffs und Filtration aufgearbeitet werden, wodurch der Überschuss Säure sowie der Katalysator abgetrennt werden. Eingesetzt werden können beispielsweise Montmorillonit enthaltende Schichtsilikate wie Bentonit oder Alumosilikate (Ambosol®).

In einer weiteren Ausführungsform kann die Veresterung durch Umsetzung des Alkohols mit (Meth)acrylsäureanhydrid bevorzugterweise in Anwesenheit mindestens eines basischen Katalysators erfolgen.

Bevorzugt sind solche Katalysatoren, die einen pK_{B}-Wert von nicht mehr als 11,0, bevorzugt von nicht mehr als 7,0 und besonders bevorzugt von nicht mehr als 3,0 aufweisen.

Prinzipiell eignen sich sämtliche Basen wie Alkali- und Erdalkalimetallhydroxide sowie anorganische Salze. Alkali- und Erdalkalimetallhydoxide können sowohl fest als auch in Lösungsmitteln gelöst, beispielsweise als wässrige Lösungen eingesetzt werden.

Das anorganische Salz weist bevorzugt mindestens ein Anion auf ausgewählt aus der Gruppe bestehend aus Carbonat (CO₃²⁻), Oxid (O²⁻), Hydroxid (OH-), Hydrogencarbonat (HCO₃⁻), Phosphat (PO₄³⁻) Hydrogenphosphat (HPO₄²⁻) und Dihydrogenphosphat (H₂PO₄⁻). Bevorzugt sind Oxid, Hydroxid und Phosphat oder Mischungen hieraus, besonders bevorzugt ist Phosphat. Das anorganische Salz weist bevorzugt mindestens ein Kation auf ausgewählt aus der Gruppe bestehend aus Alkalimetallen, Erdalkalimetallen, Tetraalkylammonium, Ammonium, Cer, Eisen, Mangan, Chrom, Molybdän, Kobalt, Nickel oder Zink. Bevorzugt sind Alkali- und Erdalkalimetalle und besonders bevorzugt sind Lithium, Natrium, Kalium oder Calcium. Besonders bevorzugte anorganische Salze einschließlich ihrer Hydrate sind LiOH, NaOH, KOH, Li₃PO₄, Na₃PO₄, K₃PO₄, Li₂CO₃, Na₂CO₃, K₂CO₃ und CaO, ganz besonders bevorzugt sind NaOH, K₂CO₃ und K₃PO₄.

In einer alternativen Ausführungsform kann die Herstellung der Verbindung der Formel (I) auch durch eine Umesterung anstelle einer Veresterung erfolgen. Dazu wird anstatt einer freien Säure bevorzugt ein C₁-C₄-Alkylester der Säure eingesetzt, also ein Methyl-, Ethyl-, n-Propyl-, Isopropyl-, n-Butyl-, sec-Butyl-, Isobutyl- oder tert.-Butylester, bevorzugt ein Methyl-, Ethyl- oder n-Butylester, besonders bevorzugt ein Methyl- oder Ethylester und ganz besonders bevorzugt ein Methylester.

Als Katalysatoren für die Herstellung von (Meth)acrylsäureestern durch Umesterung kann man beispielsweise Titanalkoholate einsetzen, deren Alkylgruppen C₁ - C₄ - Alkylreste darstellen, z.B. Tetramethyl-, Tetraethyl-, Tetraisopropyl-, Tetrapropyl-, Tetraisobutyl- und Tetrabutyltitanat (siehe z.B. EP-B1 298 867, EP-A2 960 877). Weiterhin werden als Katalysatoren u. a. Titanphenolate (DE-OS 200 86 18), Metallchelatverbindungen von z. B. Hafnium, Titan, Zirkon oder Calcium, Alkali- und Magnesiumalkoholate, organische Zinnverbindungen, wie beispielsweise Dimethylzinnoxid, Dibutylzinnoxid oder Diphenylzinnoxid, oder anorganische Salze vorgeschlagen.

Weitere geeignete Zinn enthaltende Katalysatoren sind Sn(IV)enthaltende Verbindungen wie z. B. Dialkylzinndichlorid, Dialkylzinnoxid, Dialkylzinndiacetat, Bis(trialkylzinn)oxid, Bis(dibutylchlorzinn)oxid, beispielsweise Dibutylzinndichlorid, Dimethylzinndichlorid und Dibutylzinnoxid. Die chlo-ridhaltigen Katalysatoren können zusammen mit Alkoholaten eingesetzt werden, beispielsweise mit Natriummethylat.

Das anorganische Salz weist bevorzugt mindestens ein Anion auf ausgewählt aus der Gruppe bestehend aus Carbonat (CO₃²⁻), Oxid (O²⁻), Hydroxid (OH-), Hydrogencarbonat (HCO₃⁻), Phosphat (PO₄³⁻) Hydrogenphosphat (HPO₄²⁻) und Dihydrogenphosphat (H₂PO₄⁻). Bevorzugt sind Oxid, Hydroxid und Phosphat oder Mischungen hieraus, besonders bevorzugt ist Phosphat. Das anorganische Salz weist bevorzugt mindestens ein Kation auf ausgewählt aus der Gruppe bestehend aus Alkalimetallen, Erdalkalimetallen, Tetraalkylammonium, Ammonium, Cer, Eisen, Mangan, Chrom, Molybdän, Kobalt, Nickel oder Zink. Bevorzugt sind Alkali- und Erdalkalimetalle und besonders bevorzugt sind Lithium, Natrium, Kalium oder Calcium. Besonders bevorzugte anorganische Salze einschließlich ihrer Hydrate sind LiOH, Li₃PO₄, Na₃PO₄, K₃PO₄, Na₂CO₃, K₂CO₃ und CaO, ganz besonders bevorzugt ist K₃PO₄.

Besonders geeignet sind heterogene Katalysatoren oder homogene Katalysatoren, die in heterogene Rückstände überführt werden können wie sie in den Umesterungsverfahren z.B. in DE 2 317 226 A1, DE 10 2004 036 930 A1 und WO2009/080380 beschrieben sind. Die Katalysatoren oder Rückstände der Katalysatoren werden in der Regel durch Filtration, Elektrofiltration, Absorption, Zentrifugation oder Dekantieren abgetrennt.

Zur Herstellung der Verbindungen der Formel (I) können sämtliche im Stand der Technik beschriebenen Umesterungskatalysatoren eingesetzt werden, vorzugsweise anorganische Salze einschließlich ihrer Hydrate: LiOH, Li₃PO₄, Na₃PO₄, K₃PO₄, Na₂CO₃, K₂CO₃ und CaO.

Die Umesterungsreaktion wird im Allgemeinen bei einer Temperatur von 60 bis 140 °C, bevorzugt 70 bis 110 °C durchgeführt. Dabei wird ein Azeotrop aus Schleppmittel und Alkohol kontinuierlich abdestilliert.

Geeignete, mit C₁-C₄-Alkoholen ein azeotrop siedendes Gemisch bildende Schleppmittel sind zunächst die korrespondierenden C₁-C₄-Alkylester selbst. Als separate Schleppmittel geeignet sind unter anderem Cyclohexan, Methylcyclohexan, Benzol, Toluol, Hexane und Heptane und Mischungen hieraus. Bevorzugt sind Methylacrylat, Methylmethacrylat, Ethylacrylat und Ethylmethacrylat sowie Mischungen von diesen mit n-Heptan und Cyclohexan. Der Begriff Schleppmittel umfasst in diesem Sinne das Edukt selbst sowie gegebenenfalls ein zusätzlich eingesetztes separates Lösungsmittel.

In einer bevorzugten Ausführungsform wird kein separates Lösungsmittel als Schleppmittel eingesetzt. In diesem Fall fungiert das Edukt Alkyl(meth)acrylat selbst als Schleppmittel.

Das Schleppmittel kann anschließend wieder im Reaktor ergänzt werden. Hierzu wird das azeotrope Gemisch aus Alkohol und Schleppmittel in einer bevorzugten Ausführungsform über eine geeignete Kolonne abdestilliert, in einem Mischgefäß mit Wasser gerührt und dann in einen Pha-senseparator überführt, wobei sich der Alkohol, im Allgemeinen Methanol oder Ethanol, in Wasser löst und sich die organische Phase als obere Schicht abscheidet. Die organische Phase wird vorzugsweise über den Kopf der Kolonne dem Reaktionsgemisch wieder zugeführt und damit bis auf geringe Verluste im Kreislauf geführt. Es kann aber auch alternativ frisches Schleppmittel hinzugeführt werden und eine Aufarbeitung des Schleppmittel-Alkohol-Gemisches in einem separaten Schritt erfolgen oder auf die Ergänzung des Schleppmittels ganz oder teilweise verzichtet werden.

Im Allgemeinen wird Alkyl(meth)acrylat in stöchiometrischem Überschuss eingesetzt. Vorzugsweise beträgt der Überschuss an Methyl(meth)acrylat pro zu veresternder Hydroxylgruppe 0,1 bis 100 Äquivalente, besonders bevorzugt 3 bis 50 Äquivalente, insbesondere 10 bis 40 Äquivalente.

Der Katalysator wird in einer Konzentration von 2-20 mol-% bezogen auf die Menge an Alkohol eingesetzt, bevorzugt in einer Konzentration von 3 bis 10 mol-%.

Die Umesterung kann bei Atmosphärendruck, aber auch bei Überdruck oder Unterdruck durcgeführt werden. Im Allgemeinen wird sie bei 300 bis 1000 mbar, bevorzugt bei 800 -1000 mbar (Atmosphärendruck = 1000 mbar) durchgeführt. Die Reaktionszeit beträgt im Allgemeinen 1 h bis 24 Stunden, vorzugsweise 3 bis 18 Stunden, besonders bevorzugt 6 bis 12 h. Die Umesterung kann kontinuierlich, beispielsweise in einer Rührkesselkaskade oder diskontinuierlich erfolgen.

Die Reaktion kann in allen für eine solche Umsetzung geeigneten Reaktoren durchgeführt werden. Solche Reaktoren sind dem Fachmann bekannt. Bevorzugt erfolgt die Umsetzung in einem Rührkesselreaktor.

Zur Durchmischung des Ansatzes können beliebige Verfahren eingesetzt werden wie z.B. Rührvorrichtungen. Die Durchmischung kann auch durch Einspeisen eines Gases, vorzugsweise eines Sauerstoff-haltigen Gases erfolgen.

Das Entfernen des gebildeten Alkohols, im Allgemeinen Methanol oder Ethanol, erfolgt kontinierlich oder schrittweise in an sich bekannter Weise durch azeotrope Destillation in Gegenwart eines Schleppmittels. Zusätzlich kann Methanol auch durch Strippen mit einem Gas entfernt werden.

In einer bevorzugten Ausführungsform wird aus dem abdestillierten Azeotrop aus Schleppmittel und Alkohol der Alkohol durch Waschen mit Wasser abgetrennt und das Schleppmittel in den Reaktionsbehälter zurückgeführt.

Nach Beenden der Reaktion kann der Katalysator duch die bereits beschriebenen Trennverfahren Extraktion oder Filtration aus dem Produkt entfernt und das Schleppmittel abdestilliert werden.

Es stellt eine bevorzugte Ausführungsform der vorliegenden Erfindung dar, zwischen der Umsetzung des freien Phenols mit Carbonat und/oder Alkylenoxid und der Ver- oder Umesterung, keinen Aufarbeitgsschritt, wie beispielsweise Extraktion oder Filtration, durchzuführen.

Es stellt eine weitere bevorzugte Ausführungsform der vorliegenden Erfindung dar, für die Umsetzung des freien Phenols mit Carbonat und/oder Alkylenoxid und die Ver- oder Umesterung, besonders bevorzugt für die Umsetzung des freien Phenols mit Carbonat und anschließender Umesterung oder Umsetzung mit (Meth)acrylsäureanhydrid den gleichen Katalysator einzusetzen.

Dies ist insbesondere dann vorteilhaft, wenn die eingesetzten Katalysatoren der Umsetzung des freien Phenols mit Carbonat und/oder Alkylenoxid und die Katalysatoren der Ver- oder Umesterung miteinander negativ wechselwirken, beispielsweise Säuren und Basen.

Vorteilhaft ist es, die Umsetzung des freien Phenols mit dem Carbonat unter Katalyse eines Tetraalkylammoniumhalogenids, EDTA oder eines tert. Amins wie beispielsweise Triethylamin, 2-Methylimidazol und die Umesterung wie oben bereits näher beschrieben durchzuführen.

Vorteilhaft ist es ebenfalls, die Umsetzung des freien Phenols mit dem Carbonat unter Katalyse eines Tetraalkylammoniumhalogenids oder EDTA und die Veresterung in Gegenwart einer Säure wie oben bereits näher beschrieben durchzuführen.

Vorteilhaft ist es ebenfalls, die Umsetzung des freien Phenols mit dem Carbonat unter Katalyse eines Tetraalkylammoniumhalogenids, EDTA oder eines tert. Amins wie beispielsweise Triethylamin, 2-Methylimidazol und die Veresterung mit (Meth)acrylsäureanhydrid wie oben bereits näher beschrieben durchzuführen.

Besonders vorteilhaft ist es, sowohl die Umsetzung des freien Phenols mit dem Carbonat als auch die Umesterung oder die Veresterung mit (Meth)acrylsäureanhydrid unter Katalyse eines anorganischen Salzes wie oben bereits näher beschrieben durchzuführen.

Besonderer Vorteil ist hier auch die einfache Abtrennung des Katalysators über eine Filtration nach Durchführung der beiden Reaktionsschritte.

Gleichermaßen vorteilhaft ist es, sowohl die Umsetzung des freien Phenols mit dem Carbonat als auch die Umesterung unter Katalyse der folgenden Katalysatoren durchzuführen: Alkali-, Erdalkali-, Tetraalkylammonium- halogenide, -hydroxide, -oxide, - carbonate, -hydrogencarbonate oder -phosphate

Einen Vorteil dieser Verfahrensführung stellt es dar, dass in diesem Fall auf die Abtrennung des Katalysators aus dem alkoxylierten Phenol verzichtet werden kann, sondern diese erst auf der Stufe der Verbindung der Formel (I) erfolgen kann.

Ein weiterer Gegenstand der vorliegenden Erfindung sind Polymere, die mindestens eine Verbindung (A) in einpolymerisierter Form enthalten.

Bei diesen Polymeren kann es sich in einer bevorzugten Ausführungsform um Homopolymere handeln, die ausschließlich Verbindungen der Formel (I) in einpolymerisierter Form enthalten, oder in einer anderen gleichermaßen bevorzugten Ausführungsform um Copolymere, die neben mindestens einer Verbindung der Formel (I) auch mindestens ein anderes Monomer (B) enthalten, ausgewählt aus der Gruppe bestehend aus
(B1) anderen (Meth)acrylaten als (A),
(B2) Fumar- und Maleinsäurederivaten,
(B3) Alkylvinylethern
(B4) Styrol und α-Methylstyrol
(B5) Acrylnitril
(B6) Vinylalkanoate und
(B7) (Meth)acrylamide.

Bei den Monomeren (B1) handelt es sich um Acrylsäure, Methacrylsäure und andere (Meth)acrylate als (A), bevorzugt Acrylsäure, Methacrylsäure, Cycloalkyl(meth)acrylate, Alkyl(meth)acrylate und (Meth)acrylate von Polyalkylenglykol monoethern.

Bevorzugte Cycloalkyl(meth)acrylate sind Cycloalkyl(meth)acrylate, deren Cycloalkylrest aus einem drei- bis zwölfgliedrigen Ring gebildet werden, bevorzugt einem fünf- bis zwölfgliedrigen Ring und besonders bevorzugt einem fünf- oder sechsgliedrigen Ring.

Insbesondere sind bevorzugt Cyclopentyl(meth)acrylat, Cyclohexyl(meth)acrylat, Cyclooctyl(meth)acrylat und Cyclododecyl(meth)acrylat, besonders bevorzugt Cyclopentyl(meth)acrylat, Cyclohexyl(meth)acrylat und Cyclododecyl(meth)acrylat, ganz besonders bevorzugt Cyclopentyl(meth)acrylat und Cyclohexyl(meth)acrylat und insbesondere Cyclohexyl(meth)acrylat, wobei die Acrylate jeweils gegenüber den Methacrylaten bevorzugt sind.

Beispiele für Alkyl(meth)acrylate sind Alkyl(meth)acrylate, deren Alkylrest ein bis 20 Kohlenstoffatome umfaßt, bevorzugt ein bis 12 und besonders bevorzugt ein bis 8.

Insbesondere sind bevorzugt Methyl(meth)acrylat, Ethyl(meth)acrylat, iso-Propyl(meth)acrylat, n-Propyl(meth)acrylat, n-Butyl(meth)acrylat, iso-Butyl(meth)acrylat, sek-Butyl(meth)acrylat, tert.-Butyl(meth)acrylat, n-Hexyl(meth)acrylat, n-Heptyl(meth)acrylat, n-Octyl(meth)acrylat, n-Decyl(meth)acrylat, n-Dodecyl(meth)acrylat, n-Tetradecyl(meth)acrylat, n-Hexadecyl(meth)acrylat, n-Heptadecyl(meth)acrylat), n-Octadecyl(meth)acrylat, n-Eicosyl(meth)acrylat, 2-Ethylhexyl(meth)acrylat und 2-Propylheptyl(meth)acrylat, besonders bevorzugt sind Methyl(meth)acrylat, Ethyl(meth)acrylat, n-Butyl(meth)acrylat, tert.-Butyl(meth)acrylat und 2-Ethylhexyl(meth)acrylat, ganz besonders bevorzugt sind Methylacrylat, Methylmethacrylat, Ethylacrylat, n-Butylacrylat, tert.-Butylacrylat und 2-Ethylhexylacrylat und ganz besonders bevorzugt n-Butylacrylat und 2-Ethylhexylacrylat.
Beispiele für (Meth)acrylate von Oligo- und Polyalkylenglykol monoethern sind (Meth)acrylate von Oligo- und Polyethylenglykol monoalkylether, bevorzugt die Phenylether, Methylether oder n-Butylether, besonders bevorzugt die Methylether oder n-Butylether, und ganz besonders bevorzugt die Methylether.

Als Fumar- und Maleinsäurederivate (B2) seien Fumar- und Maleinsäure sowie die C₁- bis C₄-Alkylester erwähnt sowie im Fall der Maleinsäure das Maleinsäureanhydrid. Bevorzugt sind Fumar- und Maleinsäure, Fumarsäure- und Maleinsäuremethyl-, -ethyl-, n-butylester und -2-ethylhexylester sowie Maleinsäureanhydrid, besonders bevorzugt ist Maleinsäureanhydrid.

Bei den Alkylvinylethern (B3) kann es sich bevorzugt um Alkylvinylether, bevorzugt C₁-C₈-Alkylvinylether handeln, besonders bevorzugt ausgewählt aus der Gruppe bestehend aus Methylvinylether, Ethylvinylether, *n*-Propylvinylether, *iso*-Propylvinylether, *n*-Butylvinylether, *sek-*Butylvinylether, *iso*-Butylvinylether, *tert*-Butylvinylether, Hexylvinylether und Octylvinylether, sowie Gemischen davon.

Als Monomer (B4) seien Styrol und α-Methylstyrol erwähnt, bevorzugt Styrol.

Bei dem Monomer (B5) handelt es sich um Acrylnitril.

Bei den Vinylalkanoate (B6) handelt es sich bevorzugt um Vinylester von 2 bis 13 Kohlenstoffatome aufweiseden Carbonsäuren, bevorzugt sind sie ausgewählt aus der Gruppe bestehend aus Vinylacetat, Vinylpropionat, Vinylbutyrat, Vinyl-2-ethylhexanoat, Neopentansäurevinylester, Hexansäurevinylester, Neononansäurevinylester und Neodecansäurevinylester, besonders bevorzugt ausgewählt aus der Gruppe bestehend aus Vinylacetat, Vinylpropionat, Vinylbutyrat, und Neopentansäurevinylester, ganz besonders bevorzugt ist Vinylacetat.

Bei dem Monomer (B7) handelt es sich bevorzugt um Methacrylamid und Acrylamid, besonders bevorzugt Acrylamid.

Bevorzugt sind dabei die Monomere (B1), (B3), (B4) und (B7), besonders bevorzugt (B1) und (B3) und ganz besonders bevorzugt (B1).

Es kann ausreichend sein, wenn der Anteil des Monomers (A) am Polymer in einpolymerisierter Form mindestens 1 Gew% beträgt, bevorzugt mindestens 2 Gew%, besonders bevorzugt mindestens 5 Gew% und ganz besonders bevorzugt mindestens 8 Gew%.

Bevorzugt sollte der Anteil des Monomers (A) am Polymer in einpolymerisierter Form mindestens 10 Gew% betragen, bevorzugt mindestens 20 Gew%, besonders bevorzugt mindestens 30 Gew% und ganz besonders bevorzugt mindestens 50 Gew%.

Der Anteil des Monomers (A) am Polymer in einpolymerisierter Form kann bis zu 100 Gew% betragen (Homopolymer), bevorzugt bis zu 95 Gew%, besonders bevorzugt bis zu 90, ganz besonders bevorzugt bis zu 85 und insbesondere bis zu 70 Gew%.

Im Fall von Copolymeren können ein oder mehr als ein anderes Monomer außer (A) eingesetzt werden, bevorzugt ein, zwei oder drei, besonders bevorzugt ein oder zwei und ganz besonders bevorzugt genau eines.

Man kann die Monomerkomponenten (A) sowie optional (B) bevorzugt Substanz, in Suspension oder in Lösung polymerisieren, besonders bevorzugt in Lösung oder Suspension, ganz besonders bevorzugt in Emulsion. Dazu führt man die Polymerisationsreaktion der Regel bei Normaldruck und unter einem Schutzgas wie Stickstoff durch, kann aber auch bei erhöhten Drücken, beispielsweise in einem Autoklaven, arbeitet. Die Polymerisationstemperaturen liegen in der Regel bei 50 bis 250°C, insbesondere bei 90 bis 210°C, vor allem bei 120 bis 180°C, typischerweise bei 140 bis 160°C. Als Polymerisationsreaktor eignen sich im Prinzip alle üblichen kontinuierlich oder diskontinuierlich betriebenen Apparaturen wie beispielsweise Rührkessel, Rührkesselkaskade, Rohrreaktor oder Schlaufenreaktor.

Im Fall der Emulsionspolymerisation wird die Polymerisation bevorzugt ohne Anlegen von äußerem Druck bei Temperaturen von 50 bis 95 °C gemacht.

Üblicherweise wird die Polymerisation durch radikalisch zerfallende Initiatoren gestartet, hierzu eignen sich Luft oder Sauerstoff oder anorganischen oder organischen Peroxiden und/oder Hydroperoxiden sowie organische Azoverbindungen. Als organische Peroxide bzw. Hydroperoxide kommen beispielsweise Diisopropylbenzolhydroperoxid, tert-Butyl hydroperoxid, Cumolhydroperoxid, Methylisobutylketonperoxid, Di-tert.-butylperoxid und tert.-Butylperisononat in Betracht. Als organische Azoverbindung ist beispielsweise Azobisisobutyronitril ("AIBN") geeignet. Ferner sind neben Wasserstoffperoxid Peroxodisulfate zu erwähnen, besonders Natrium Peroxodisulfate.

Denkbar sind auch Redoxpaare der obigen Peroxide oder Hydroperoxide mit Disulfiten, dem Addukt aus einem Disulfit und Aceton, bevorzugt Acetonbisulfit oder Rongalit® C.

Weiterhin können geeignete Regler wie aliphatische Aldehyde oder Ketone oder auch Wasserstoff bei der Polymerisation mitverwendet werden.

Falls Lösungs- oder Suspensionsmittel bei der Polymerisation mitverwendet werden, kommen hierfür die üblichen inerten Flüssigkeiten wie aromatische Kohlenwasserstoffe, z. B. Toluol, Xylole oder entsprechende technische Kohlenwasserstoffgemische wie Solvesso® oder Solvent Naphtha, sowie aliphatische und cycloaliphatische Kohlenwasserstoffe und Kohlenwasserstoffgemische, wie beispielsweise Pentan, Hexane, Heptane, Petrolether, Ligroin, Cyclohexan, Methylcyclohexan und Dekalin, in Betracht.

In einer bevorzugten Ausführungsform wird die Polymerisation mittels Emulsionspolymerisation, besonders bevorzugt mittels Miniemulsionspolymerisation durchgeführt.

In einer bevorzugten Ausführungsform wird die mittels Miniemulsionspolymerisation ausgeführt wie in der WO 2016/046195 A1, dort besonders von Seite 15, Zeile 31 bis Seite 27, Zeile 32, was hiermit durch Bezugnahme Bestandteil der vorliegenden Offenbarung sei.

Bei diesen Verfahren wird in der Regel in einem ersten Schritt aus den Monomeren, der notwendigen Menge an Emulgatoren und/oder Schutzkolloid, ggf. hydrophobem Zusatz und Wasser eine Mischung hergestellt und daraus eine Emulsion erzeugt. Die hydrophoben Monomere sind dabei durch die Hilfsstoffe voremulgiert.

Bevorzugt wird in einem ersten Schritt die organische Phase homogen hergestellt und in einem zweiten Schritt diese organische Phase in eine Wasserphase gegeben oder eine Wasserphase in die so hergestellte organische Phase gegeben.

Anschließend wird durch Rühren eine Öl-in-Wasser Makroemulsion hergestellt. Die Teilchen der Makroemulsion werden durch Ultraschall und/oder Hochdruckhomogenisierung auf eine Größe von kleiner 1 µm zerkleinert.

Bevorzugt ist in der so hergestellten Emulsion die mittlere Teilchengröße (z-Mittelwert), gemessen mittels dynamischer Lichtstreuung, im allgemeinen <1000 nm, bevorzugt <500 nm und besonders bevorzugt 20 - 500 nm. Im Normalfall beträgt der Durchmesser 50 - 400 nm.

Die erhaltenen Teilchen entscheiden sich im Vergleich zu der klassischen Emulsionspolymerisation in ihrer Größe. Während bei der klassischen Emulsionspolymerisation die Tröpfchengröße größer 1,5 µm, besonders 2 bis 50 µm beträgt, so beträgt die Tröpfchengröße bei der Präparation einer Miniemulsion weniger als 1000 nm.

Die in Tröpfchenform emulgiert vorliegenden Monomere werden durch einen Initiator anschließend polymerisiert.

Zur Erzeugung der Emulsion ist erfindungsgemäß ein Energieeintrag von nicht mehr als 10⁸ W/m³ erforderlich.

Zweckmäßig ist es, die Herstellung der Emulsion so schnell durchzuführen, dass die Emulgierzeit klein im Vergleich zur Reaktionszeit der Monomere untereinander ist.

Eine bevorzugte Ausgestaltung des Verfahrens besteht darin, dass man die Gesamtmenge der Emulsion unter Kühlen auf Temperaturen unterhalb von Raumtemperatur herstellt. Bevorzugt wird die Emulsionsherstellung in weniger als 10 min bewerkstelligt. Durch Erhöhung der Temperatur der Emulsion unter Rühren wird der Umsatz vervollständigt. Die Reaktionstemperaturen liegen zwischen Raumtemperatur und 120° C, bevorzugt zwischen 60° und 100° C. Falls erforderlich kann Druck angelegt werden, um leicht siedende Komponenten flüssig zu halten. Generell werden bei der Erzeugung von Emulsionen ionische und/oder nichtionische Emulgatoren und/oder Schutzkolloide bzw. Stabilisatoren als grenzflächenaktive Verbindungen verwendet.

Eine ausführliche Beschreibung geeigneter Schutzkolloide findet sich in Houben-Weyl, Methoden der organischen Chemie, Band XIV/1, Makromolekulare Stoffe, Georg-Thieme-Verlag, Stuttgart, 1961, S. 411 bis 420. Als Emulgatoren kommen sowohl anionische, kationische als auch nichtionische Emulgatoren in Betracht. Vorzugsweise werden als begleitende grenzflächenaktive Substanzen ausschließlich Emulgatoren eingesetzt, deren Molekulargewichte im Unterschied zu den Schutzkolloiden üblicherweise unter 2000 g/mol liegen. Selbstverständlich müssen im Falle der Verwendung von Gemischen grenzflächenaktiver Substanzen die Einzelkomponenten miteinander verträglich sein, was im Zweifelsfall anhand weniger, einfacher Vorversuche überprüft werden kann. Vorzugsweise werden anionische und nichtionische Emulgatoren als grenzflächenaktive Substanzen verwendet. Gebräuchliche begleitende Emulgatoren sind z.B. ethoxylierte Fettalkohole (EO-Grad: 3 bis 50, Alkylrest: C₈- bis C₃₆), ethoxylierte Mono-, Di- und Tri- Alkylphenole (EO-Grad: 3 bis 50, Alkylrest: C₄- bis C₉), Alkalimetallsalze von Dialkylestern der Sulfobernsteinsäure sowie Alkali- und/oder -Ammoniumsalze von Alkylsulfaten (Alkylrest: C₈-bis C₁₂), von ethoxylierten Alkanolen (EO-Grad: 4 bis 30, Cg), von Alkylsulfonsäuren (Alkylrest: C₁₂- bis C₁₈) und von Alkylarsulfonsäuren (Alkylrest: C₉- bis C₁₈).

Geeignete Emulgatoren finden sich auch in Houben-Weyl, Methoden der organischen Chemie Band 14/1, Makromolekulare Stoffe, Georg Thieme Verlag, Stuttgart, 1961, Seiten 192 bis 208.

Handelsnamen von Emulgatoren sind z.B. Dowfax® 2 A1 der Firma Dow, Emulan® NP 50, Emulan® OG, Disponil® FES 27, Disponil® FES 32, Disponil® FES 77, Lutensol® AT 11, Disponil® SDS, Lutensol® AT 18, Lutensol® TO 2, Lutensol® TO 3, Lutensol® TO 5, Lutensol® TO 8, Lutensol TO® 10, Nekanil® 904 S der Firma BASF, Lumiten® 1-RA und Lumiten E 3065 der Firma BASF, Dextrol® OC 50 der Firma AVEBE GmbH, etc.

Bezogen auf die in der wäßrigen Emulsion enthaltende Menge an Monomeren liegt diese Emulgatorenmenge in der Regel im Bereich von 0,1 bis 10 Gew.-%. Wie bereits erwähnt, können den Emulgatoren Schutzkolloide an die Seite gegeben werden, die die disperse Verteilung der letztlich resultierenden wäßrigen Polymerisatdispersion zu stabilisieren vermögen. Unabhängig von der eingesetzten Emulgatormenge können die Schutzkolloide in Mengen bis zu 50 Gew.-%, beispielsweise in Mengen von 1 bis 30 Gew.-% bezogen auf die Monomere eingesetzt werden.

Als Costabilisatoren als hydrophober Zusatzstoff können den Monomeren Stoffe in Mengen von 0,01 Gew.% bis 10 Gew.%, bevorzugt 0,1 - 1 Gew%, zugesetzt werden, die eine Löslichkeit in Wasser von weniger als 5 x 10⁻⁵, bevorzugt 5 x 10⁻⁷ g/l aufweisen. Beispiele sind Kohlenwasserstoffe wie Hexadecan, halogenierte Kohlenwasserstoffe, Silane, Siloxane, hydrophobe Öle (Olivenöl), Farbstoffe etc. An ihrer Stelle können auch blockierte Polyisocyanate die Funktion des Hydrophobs übernehmen.
In einer bevorzugten Ausführung wird zunächst eine Mischung aus den Monomeren, Emulgatoren und/oder Schutzkolloiden, sowie gegebenenfalls hydrophobem Zusatz und Wasser hergestellt. Dann wird eine Emulsion erzeugt und diese unter Rühren erwärmt. Nach Erreichen der erforderlichen Reaktionstemperatur wird der Initiator über die Wasserphase zugegeben.

Selbstverständlich kann der Initiator aber auch schon in die Ölphase der Emulsion, d. h. in die Monomerphase, gegeben werden, bevor dispergiert wird oder sofort nach der Herstellung der Emulsion zur Wasserphase gegeben werden. Anschließend wird unter Rühren erwärmt und polymerisert.

Besonders bevorzugt lässt sich der Prozess zur Herstellung einer Dispersion durch Miniemulsionspolymerisation wie folgt beschreiben:
i. Mischen der Monomere sowie evtl. Zugabe eines Cosolvents
ii. Herstellung einer Makroemulsion durch die Zugabe der hydrophoben Phase aus Schritt i. in eine vorgemischte Wasser-Emulgatorlösung
iii. Zerkleinern der Partikel durch Ultraschall und/oder Hochdruckhomogenisierung auf Teilchengrößen kleiner 1000nm, bevorzugt <500 nm und besonders bevorzugt 20 - 500 nm
iv. Initiierung einer freien, radikalischen Polymerisation der Öl-in-Wasser Miniemulsion aus Schritt iii.

Das massenmittlere Molekulargewicht M_{W} der so erhältlichen Polymere beträgt in der Regel 5000 g/mol oder mehr, bevorzugt mindestens 10000 g/mol, besonders bevorzugt mindestens 20000 g/mol, ganz besonders bevorzugt mindestens 30000 g/mol und insbesondere mindestens 50000 g/mol, und speziell mindestens 100000 g/mol.

Die Obergrenze des massenmittleren Molekulargewichts M_{W} der so erhältlichen Polymere beträgt in der Regel bis zu 1000000 g/mol, bevorzugt bis zu 700000 und besonders bevorzugt bis zu 300000 g/mol.

Die Polydispersität M_{w}/Mₙ beträgt in der Regel nicht mehr als 5, bevorzugt nicht mehr als 4, besonders bevorzugt nicht mehr als 3, ganz besonders bevorzugt nicht mehr als 2 und insbesondere nicht mehr als 1,5.

Es stellt einen besonderen Vorteil der Miniemulsionspolymerisation dar, dass hierbeit im Vergleich mit z.B. Lösungs- oder Massepolymerisation höhere Molekulargewichte erzielt werden.

Die nach der vorliegenden Erfindung erhältlichen Verbindungen (A) und diese in einpolymerisierter Form enthaltenden Polymere finden Verwendung in der Herstellung von Klebstoffen, Klebrohstoffen, Kraftstoffadditiven, Schmierstoffadditiven, als Elastomere oder als Grundbestandteil von Dichtungs- und Versiegelungsmassen.

### Beispiele

### Analytik

Größenausschlusschromatographie wurde in THF + 0,1% Trifluoressigsäure bei 35 °C und einer Durchflussgeschwindigkeit von 1 mL/min mit einer Säulenkombination aus ggf. einer PLgel Vorsäule und zwei PLgel MIXED-B Säulen (i.D. 7,5 mm, Länge 30 cm, Ausschlussgrenze 500-10000000 g/mol) durchgeführt. Die Kalibrierung erfolgte mit eng verteilten Polystyrol-Standards.

### Beispiel A

1775 g Polyisobuten (Mₙ 1000 g/mol) wurden in 360 g Hexan gelöst. 345 g Phenol wurden in 180 g Toluol in einem 4L HWS Gefäß mit Bodenablass vorgelegt und mittels Kältethermostat auf 16 °C gekühlt. 32,7 g BF₃-Phenol Komplex wurden zu der Phenollösung gegeben. Die Polyisobuten-Lösung wurde innerhalb von 5 h 30 min bei 16 °C zudosiert. Der Ansatz wurde über Nacht bei Raumtemperatur gerührt und anschließend mit 1 L Methanol abgebrochen. Die Aufarbeitung und Abtrennung von überschüssigem Phenol erfolgte durch Verdünnen mit Hexan und Extraktion gegen Methanol. Der Umsatz wurde mittels ¹H-NMR (400MHz in CDCl₃) bestimmt.
¹H-NMR (400MHz in CDCl₃) δ (ppm) = 7,22 (m, 2H), 6,75 (m, 2H), 4,57 (s, 1H), 1,79 (s, 2H), 1,65-0,90 (CH₃ und CH₂, PIB), 0,81 (s, 6H).

### Beispiel B

1380 g Polyisobuten (Mₙ 2300 g/mol) wurden in 400 g Hexan gelöst. 113 g Phenol wurden in 200 g Toluol in einem 4L HWS Gefäß mit Bodenablass unter Stickstoff vorgelegt und mittels Kältethermostat auf 19 °C gekühlt. 15,4 g BF₃-Phenol Komplex wurden zu der Phenollösung zugetropft. Die Polyisobuten-Lösung wurde innerhalb von 4 h bei 17-20 °C zudosiert. Der Ansatz wurde 48 h bei Raumtemperatur gerührt und anschließend mit einer Methanol/Hexan Mischung (1L /500 mL) abgebrochen. Die Aufarbeitung und Abtrennung von überschüssigem Phenol erfolgte durch Extraktion gegen Methanol. Der Umsatz wurde mittels ¹H-NMR (400MHz in CD₂Cl₂) bestimmt.

### Beispiel 1

Die Umesterung erfolgte unter Magerlufteinleitung in einem 4L-Doppelmantelreaktor, ausgestattet mit einem Ankerrührer, einer Magerlufteinleitung, einer Trennkolonne und einem Flüssigkeitsteiler. In dieser Apparatur wurden 3383 g einer 30%igen Lösung eines einfach ethoxylierten, einen Polyisobutenrest tragenden Phenols gemäß Beispiel 9 in Methylmethacrylat eingefüllt. 0,3 g Methylhydrochinon (MEHQ) und 14,9 g Kaliumphosphat wurden zugegeben und das Reaktionsgemisch wurde unter Magerlufteinleitung (2 L/h) bei einer Badtemperatur von anfangs 110 °C aufgeheizt. Es wurde ein Druck von 600 mbar (abs.) eingestellt und kontinuierlich ein Azeotrop aus Methanol und Methylmethacrylat abdestilliert, wobei sich eine Sumpftemperatur von 84 bis 87 °C einstellte. Das Rücklaufverhältnis betrug variabel 10:1 bis 20:1 (Rücklauf: Ablauf). Nach Beenden der Reaktion wurde das Produkt mit 15 g Hyflo Super Cel® und 15 g Ambosol® MP 25 versetzt, über einen Druckfilter bei max. 2 bar filtriert und das Reaktionsgemisch im Vakuum konzentriert. Es wurden 970 g Produkt erhalten. Der Umsatz wird zu > 99 % via TAI NMR bestimmt. Der Stabilisatorgehalt betrug 130 ppm MEHQ (bestimmt mit HPLC). ¹H-NMR (400MHz in CD₂Cl₂) δ (ppm) = 7,28 (m, 2H), 6,83 (m, 2H), 6.11 (m, 1H), 5,58 (m, 1H), 4,46 (m, 2H), 4,20 (m, 2H), 1,94 (s, 3H), 1,82 (s, 2H), 1,65-0,90 (CH₃ und CH₂, PIB), 0,81 (s, 6H).

Der Fluorgehalt (bestimmt per Combustion IC) betrug < 1 ppm.

### Beispiel 2 (Vergleich)

Die Umesterung erfolgte unter Lufteinleitung in einem 0,75L-Doppelmantelreaktor, ausgestattet mit einem Ankerrührer, einer Lufteinleitung, einer Trennkolonne und einem Flüssigkeitsteiler. In dieser Apparatur wurden 50 g eines einen Polyisobutenrest tragenden Phenols, erhalten analog Beispiel A, und 600 g Methylmethacrylat vorgelegt. 0,24 g Methylhydrochinon (MEHQ) und 0,75 g Kaliumphosphat wurden zugegeben und das Reaktionsgemisch wurde unter Lufteinleitung (0,3 L/h) bei einer Badtemperatur von 115 °C aufgeheizt. Es wurde ein Druck von 600 mbar (abs.) eingestellt und kontinuierlich MMA mit einem Anteil Methanol abdestilliert, wobei sich eine Sumpftemperatur von 85 bis 86 °C einstellte. Nach 6 h wurde das Reaktionsgemisch über einen Druckfilter bei max. 2 bar filtriert und im Vakuum konzentriert. Der Umsatz wurde zu 2,5 % über 1H NMR bestimmt.

### Beispiel 3

Die Umsetzung erfolgte in einen 500 mL 4-Hals-Rundkolben mit Ölbadheizung, Thermometer, Rückflusskühler, Lufteinleitung und Teflon-Halbmondrührer. 145 g eines auf 60°C temperierten, einfach ethoxylierten, einen Polyisobutenrest tragenden Phenols (hergestellt mit 2-Methylimidazol als Katalysator gemäß Beispiel 9) sowie 33 mg tert. Butyl hydroxytoluol wurden bei einer Badtemperatur von 80°C vorgelegt. Unter Lufteinleitung (ca. 0,3 L/h) wurden bei einer Badtemperatur von 95°C 18,9 g Methacrylsäureanhydrid (94%ig, stabilisiert mit Topanol® A) zugegeben und die Badtemperatur auf 100°C erhöht. Nach 1,33 h wurden 80 mg NaOH zugegeben. Nach insgesamt 6 h wurde der Umsatz zu > 90 % via TAI NMR bestimmt. Es wurden 1,6 g Methacrylsäureanhydrid nachdosiert und weitere 3h bei einer Badtemperatur von 100°C reagieren gelassen. Der Umsatz wurde jetzt zu > 95 % via TAI NMR bestimmt.

111 g des Produktes wurden mit 3 g n-Butanol bei 60°C versetzt und 1 h gerührt. Die Produktphase wurde 3 x mit je 30 mL Methanol extrahiert, die methanolischen Phasen wurden jeweils abgetrennt und verworfen. Die Produktphase wurde im Vakuum konzentriert. Der Gehalt an Methacrylsäure betrug 1 Gew%, Methacrylsäureanhydrid wird nicht mehr gefunden (bestimmt via 1H NMR).

### Beispiel 4

Die Umsetzung erfolgte in einen 500 mL 4-Hals-Rundkolben mit Ölbadheizung, Thermometer, Rückflusskühler, Lufteinleitung und Teflon-Halbmondrührer. 145 g eines auf 60°C temperierten, einfach ethoxylierten, einen Polyisobutenrest tragenden Phenols (hergestellt mit 2-Methylimidazol als Katalysator gemäß Beispiel 9) sowie 33 mg tert. Butyl hydroxytoluol wurden bei einer Badtemperatur von 80°C vorgelegt. Unter Lufteinleitung (ca. 0,3 L/h) wurden bei einer Badtemperatur von 95°C 19,7 g Methacrylsäureanhydrid (94%ig, stabilisiert mit Topanol® A) zugegeben. Nach 2,75 h wurden 80 mg NaOH zugegeben und die Badteperatur auf 100°C erhöht. Nach insgesamt 5,5 h wurde die Reaktion beendet und das 80°C warme Produkt ausgefüllt.

Aus dem Produkt wurde im Vakuum bei 80°C bis 2,2 mbar Methacrylsäure abdestilliert. Die Probe enthiellt noch 2,3 Gew% Methacrylsäure (bestimmt via NMR). Es wurde eine etwa 50%ige Lösung in Toluol hergestellt. Die Lösung wurde mit 32%iger wässriger NaOH auf einen pH>12 gestellt und 2 h bei Raumtemperatur gerüht. Es wurden 10 g Bentonit® sowie 10 g Hyflo Super Cel® zugegeben. Anschließend wurde über einen Druckfilter bei max. 2 bar filtriert und das Produkt im Vakuum konzentriert. Der Umsatz wurde zu > 95 % via TAI NMR bestimmt. Der Gehalt an Methacrylsäure betrug <0,25 Gew%, Methacrylsäureanhydrid wird nicht mehr gefunden (bestimmt via NMR).

### Beispiel 5

Die Umsetzung mit Ethylencarbonat erfolgte unter Stickstoffeinleitung (ca. 0,3 L/h) in einem 750 mL-Doppelmantelreaktor, ausgestattet mit einem Ankerrührer, einer Gaseinleitung, einer Trennkolonne und einem Flüssigkeitsteiler. In dieser Apparatur wurden 230,2 g eines einen Polyisobutenrest der Molmasse 1000 tragenden Phenols erhalten analog Beispiel A, 21,9 g Ethylencarbonat sowie 4,1 g Kaliumphosphat vorgelegt und mit einer Badtemperatur von 177-180°C aufgeheizt, wobei sich CO₂ entwickelte. Die Innentemperatur betrug 169 - 170 °C. Nach 7,5 h wurde die Mischung auf 60°C abgekühlt. 500 g Methylmethacrylat und 0,1 g MEHQ wurden hinzugefügt. Das Reaktionsgemisch wurde unter Lufteinleitung (ca. 0,3 L/h) bei einer Badtemperatur von 115 °C aufgeheizt. Es wurde ein Druck von 600 mbar (abs.) eingestellt und kontinuierlich ein Azeotrop aus Methanol und Methylmethacrylat abdestilliert, wobei sich eine Sumpftemperatur von 84 bis 87 °C einstellte. Die Destillate wurden gesammelt und auf ihren Methanol-Gehalt analysiert. Nach Beenden der Reaktion wurde das Produkt über einen Druckfilter bei max. 2 bar filtriert und das Reaktionsgemisch im Vakuum konzentriert. Der Umsatz wurde zu > 99 % via TAI NMR bestimmt.

### Beispiel 6

Die Umesterung erfolgte unter Lufteinleitung in einem 750 mL-Doppelmantelreaktor, ausgestattet mit einem Ankerrührer, einer Lufteinleitung, einer Trennkolonne und einem Flüssigkeitsteiler. In dieser Apparatur wurden 990 g einer 29,3%igen Lösung von eines einfach ethoxylierten, einen Polyisobutenrest tragenden Phenols gemäß Beispiel 9 (hergestellt mit 2-Methylimidazol als Katalysator) in Methylmethacrylat eingefüllt. 0,495 g Methylhydrochinon (MEHQ) wurden zugegeben und unter Lufteinleitung bei 95°C Badtemperatur und einem Vakuum von abs. 300 mbar 150 mL Methylmethacrylat abdestilliert.

150 mL Methylmethacrylat wurden ergänzt und das Reaktionsgemisch unter Lufteinleitung (0,3 L/h) bei Normaldruck mit einer Badtemperatur von 120 °C aufgeheizt. 2,3 g Tetraisopropyltitanat wurden hinzugefügt und bei einer Badtemperatur von 125°C und einem Vakuum von abs. 700 mbar wurde kontinuierlich ein Azeotrop aus Methanol und Methylmethacrylat abdestilliert, wobei sich eine Sumpftemperatur von 98 °C einstellt.

Nach Beenden der Reaktion wurde die Reaktionsmischung analysiert. Der Umsatz wurde zu 14 % via TAI NMR bestimmt.

### Beispiel 7

Die Umsetzung erfolgte in einem 500 mL 4-Hals-Rundkolben mit Ölbadheizung, Thermometer, Rückflusskühler, Wasserauskreiser, Lufteinleitung und Teflon-Halbmondrührer. 145 g eines auf 60°C temperierten, einfach ethoxylierten, einen Polyisobutenrest tragenden Phenols gemäß Beispiel 9 (hergestellt mit 2-Methylimidazol als Katalysator), 100 g Toluol, 10,3 g Methacrylsäure (stabilisiert mit 200 pm MEHQ), 0,76 g p-Toluolsulfonsäuremonohydrat sowie 49 mg MEHQ wurden bei einer Badtemperatur von 80°C vorgelegt. Das Reaktionsgemisch wurde aufgeheizt. Bei einer Badtemperatur von 127°C fing die Mischung an zu sieden. Die Badtemperatur wurde im Verlauf der Reaktion auf 140°C angehoben. Es wurden weitere 1,17 g p-Toluolsulfonsäuremonohydrat hinzugefügt. Nach insgesamt 4,5 h Reaktionszeit war kein Wasser in nennenswertem Umfang entstanden (ca. 0,2 mL Wasser). Die Reaktionsmischung wurde abgekühlt und es wurden nun bei einer Sumpftemperatur von 95°C 7,7 g Methansulfonsäure sowie weitere 5,1 g Methacrylsäure hinzugefügt. Die Badtemperatur wurde wieder auf 140°C eingestellt. In weiteren 3 h Reaktionszeit wurden insgesamt 72% der erwarteten Menge Wasser ausgekreist, in einer weiteren Stunde (insgesamt dann 8,5 h Reaktionszeit) ging kein Wasser mehr über. Die Reaktion wurde abgebrochen.

### Beispiel 9

Ein einen Polyisobutenrest tragendes Phenol erhalten analog Beispiel A (1 eq.) und Ethylencarbonat (1,1 eq.) wurde unter Stickstoffatmosphäre gemischt und auf 100 °C aufgeheizt. 2-Methylimidazol (0,6 Gew%) wurden zugegeben und das Reaktionsgemisch langsam innerhalb von 5 Stunden auf 150 °C aufgeheizt bis keine Gasentwicklung mehr zu sehen war. Ab 140 °C wurde eine Verfärbung des Reaktionsgemisches von leicht gelb zu braun/schwarz beobachtet. Der Umsatz wurde mittels ¹H-NMR Spektroskopie verfolgt.

### Beispiel 11

Ein einen Polyisobutenrest tragendes Phenol erhalten analog Beispiel A (1 eq.) und Ethylencarbonat (1,3 eq.) wurden unter Stickstoffatmosphäre gemischt und auf 170 °C geheizt. Kaliumphosphat (1,46 wt%) wurde zugegeben und das Reaktionsgemisch 6 Stunden bei 170 °C gerührt bis keine Gasentwicklung mehr zu sehen war. Es wurde keine Verfärbung beobachtet. Der Umsatz wurde mittels ¹H-NMR Spektroskopie verfolgt.

### Beispiel 12

Ein einen Polyisobutenrest tragendes Phenol, erhalten analog Beispiel B (1 eq.), und Ethylencarbonat (1,3 eq.) wurden unter Stickstoffatmosphäre gemischt und auf 110 °C geheizt. Kaliumphosphat (1,46 Gew%) wurde zugegeben und das Reaktionsgemisch 48 h bei 120-170 °C unter Vakuum gerührt.

Der Umsatz wurde mittels ¹H-NMR Spektroskopie verfolgt.

### Beispiel 13

Die Umesterung erfolgte unter Magerlufteinleitung in einem 4L-Doppelmantelreaktor, ausgestattet mit einem mehrstufigen Balkenrührer, einer Magerlufteinleitung, einer Trennkolonne und einem Flüssigkeitsteiler. In diese Apparatur wurde eine Lösung aus 450 g eines einfach ethoxylierten, einen Polyisobutenrest tragenden Phenols gemäß Beispiel 12 in 1500 g Methylmethacrylat eingefüllt. 0,13 g Methylhydrochinon (MEHQ) und 10,5 g Kaliumphosphat wurden zugegeben und das Reaktionsgemisch wurde unter Magerlufteinleitung (0,5 L/h) bei einer Badtemperatur von anfangs 115 °C aufgeheizt. Es wurde ein Druck von 600 mbar (abs.) eingestellt und kontinuierlich ein Azeotrop aus Methanol und Methylmethacrylat abdestilliert, wobei sich eine Sumpftemperatur von 84°C einstellte. Das Rücklaufverhältnis betrug 20:1 (Rücklauf: Ablauf). Die Badtemperatur wurde im Verlauf der Reaktion auf 110°C abgesenkt. Nach Beenden der Reaktion wurde das Reaktionsgemisch über einen Druckfilter bei max. 2 bar filtriert und im Vakuum bei 75°C Badtemperatur konzentriert. Es wurden 449 g Produkt erhalten. Der Umsatz wird zu > 99 % via TAI NMR bestimmt.

### Homopolymerisationen

### Lösungspolymerisation:

### Polymerisationsbeispiel 1:

Die Polymerisation erfolgte unter leichtem Stickstoffstrom in einem 4 l Doppelmantelgefäß mit Heizkreis, Umwälzpumpe, Pilotrührwerk, langem Intensivkühler, Ankerrührer und Rührmotor. 98,17 g des Produktes aus Beispiel 3 wurden in 391,32 g ortho-Xylol vorgelegt und auf 80 °C aufgeheizt. Bei einer Innentemperatur von 79 °C wurden 0,26 g tert.-Butylperpivalat (75 %ig) in 19,63 g ortho-Xylol innerhalb von 3 Stunden zudosiert. Der Ansatz wurde anschließend innerhalb von 15 min auf 90 °C aufgeheizt und 0,18 g tert.-Butylperocctoat in 19,63 g ortho-Xylol wurden innerhalb von 30 min zudosiert. Der Umsatz wurde mittels ¹H-NMR zu 55% bestimmt. Ein M_{w} von 27700 g/mol (PDI = 12,4) wurde mittels GPC (RI Dektektor) und ein M_{w} von 25000 g/mol mittels GPC (MALLS) bestimmt.

### Miniemulsionspolymerisation:

### Polymerisationsbeispiel 2:

21,5 g des Produktes aus Beispiel 3 wurden zunächst in 31,5 g Hexan gelöst.

70,88 g Wasser und 3,68 g Disponil® FES 27 wurden in einem 250ml Gefäß vorgemischt und die Makromonomerlösung wurde langsam zugegeben. Die dabei gebildete Präemulsion wurde für 50 min unter starkem Rühren weiter emulgiert. Anschließend wurde die Präemulsion für 2 min bei höchster Stufe mit einer Ultraschallsonde mit 400 W und 24 kHz beschallt. Die Emulsion wurde dabei gekühlt. Die Miniemulsion wurde in eine 250ml Rührapparatur gegeben und durch einen Stickstoffstrom bei 150 u/min für 10 min inertisiert. Die Innentemperatur wurde auf 70 °C eingestellt und 2,15 g 10%ige tert. Butylhydroperoxidlösung zugegeben. Anschließend wurden 17,2 g einer 2% Natriumacetonbisulfitlösung mit einer Zualufzeit von 3 Stunden dosiert. Die Molmasse (M_{w}) der erhaltenen Dispersion wurde mittels GPC (RI Detektor) auf 293000 g/mol und GPC (UV 275 nm) auf 326000 g/mol bestimmt.

Die Molmasse (Mₙ) der erhaltenen Dispersion wurde mittels GPC (RI Detektor auf 5720 g/mol) und GPC (UV 275 nm) auf 6590 g/mol bestimmt. Die niedrigen Mₙ Werte sind hierbei auf Restmonomere zurückzuführen

### Copolymere

### Polymerisationsbeispiel 3:

30 g des Produktes aus Beispiel 3 und 30 g Methylmethacrylat in 207 g Toluol wurden vorgelegt und auf 80 °C aufgeheizt. 5 % einer Lösung aus 4 g tert.-Butylperpivalat (75%ig) in 37,33 g Toluol wurden innerhalb von einer Minute zudosiert und 10 min bei 80 °C gerührt (150 U/min) bevor die restlichen 95% der Lösung innerhalb von 4,5 Stunden zudosiert wurden. Nach Dosierende wurden weitere 1,5 Stunden bei 80 °C gerührt.

### Polymerisationsbeispiel 4:

45 g des Produktes aus Beispiel 3 und 15 g Methylmethacrylat in 207 g Toluol wurden vorgelegt und auf 80 °C aufgeheizt. 5 % einer Lösung aus 4 g tert.-Butylperpivalat (75%ig) in 37,33 g Toluol wurden innerhalb von einer Minute zudosiert und 10 min bei 80 °C gerührt (150 U/min) bevor die restlichen 95% der Lösung innerhalb von 4,5 Stunden zudosiert wurden. Nach Dosierende wurden weitere 1,5 Stunden bei 80 °C gerührt.

## Patentansprüche

1. Verbindungen (A) der Formel (I) 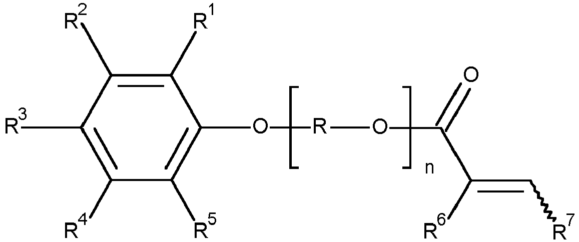 worin
R¹ bis R⁵ jeweils unabhängig voneinander ausgewählt sind aus der Gruppe bestehend aus Wasserstoff, C₁-C₂₀-Alkyl, C₁-C₂₀-Alkyloxy und C₈-C₃₅₀₀-Polyisobutyl und C₈-C₃₅₀₀-Polyisobutenyl,
R eine 2 bis 10 Kohlenstoffatome aufweisende Alkylengruppe,
R⁶ Wasserstoff oder Methyl,
R⁷ Wasserstoff, Methyl oder COOR⁸,
R⁸ Wasserstoff oder C₁-C₂₀-Alkyl und
n eine positive ganze Zahl von 1 bis 50
bedeuten,
mit der Maßgabe, dass
mindestens einer der Reste R¹ bis R⁵ einen C₈-C₃₅₀₀-Polyisobutyl oder C₈-C₃₅₀₀-Polyisobutenyl darstellt
und von Polyisobuten abgeleitet ist, das einen Gehalt an terminal angeordneten Doppelbindungen von wenigstens 50 Mol-%, bezogen auf die Gesamtanzahl an Polyisobuten-Makromolekülen, aufweist.

2. Polymere, enthaltend in einpolymerisierter Form
mindestens eine Verbindung (A) der Formel (I) 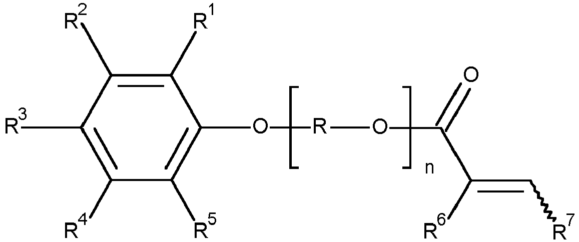 worin
R¹ bis R⁵ jeweils unabhängig voneinander ausgewählt sind aus der Gruppe bestehend aus Wasserstoff, C₁-C₂₀-Alkyl, C₁-C₂₀-Alkyloxy und C₈-C₃₅₀₀-Polyisobutyl und C₈-C₃₅₀₀-Polyisobutenyl,
R eine 2 bis 10 Kohlenstoffatome aufweisende Alkylengruppe,
R⁶ Wasserstoff oder Methyl,
R⁷ Wasserstoff, Methyl oder COOR⁸,
R⁸ Wasserstoff oder C₁-C₂₀-Alkyl und
n eine positive ganze Zahl von 1 bis 50
bedeuten,
mit der Maßgabe, dass
mindestens einer der Reste R¹ bis R⁵ einen C₈-C₃₅₀₀-Polyisobutyl oder C₈-C₃₅₀₀-Polyisobutenyl darstellt
und von Polyisobuten abgeleitet ist, das einen Gehalt an terminal angeordneten Doppelbindungen von wenigstens 50 Mol-%, bezogen auf die Gesamtanzahl an Polyisobuten-Makromolekülen, aufweist
und optional mindestens ein Monomer (B) ausgewählt aus der Gruppe bestehend aus
(B1) andere (Meth)acrylate als (A),
(B2) andere Fumar- und Maleinsäurederivate als (A),
(B3) Alkylvinylether
(B4) Styrol und α-Methylstyrol
(B5) Acrylnitril
(B6) Vinylalkanoate und
(B7) (Meth)acrylamide.

3. Verbindungen bzw. Polymer gemäß einem der vorstehenden Ansprüche, **dadurch gekennzeichnet, dass** die in die Verbindungen der Formel (I) eingebauten C₈-C₃₅₀₀-Polyisobutyl und C₈-C₃₅₀₀-Polyisobutenylreste von Polyisobuten abgeleitet sind, das einen Gehalt an terminal angeordneten Doppelbindungen von wenigstens 60 Mol-%, bezogen auf die Gesamtanzahl an Polyisobuten-Makromolekülen, aufweist.

4. Verbindungen bzw. Polymer gemäß einem der vorstehenden Ansprüche, **dadurch gekennzeichnet, dass** in die in die Verbindungen der Formel (I) eingebauten C₈-C₃₅₀₀-Polyisobutyl und C₈-C₃₅₀₀-Polyisobutenylreste von Polyisobuten abgeleitet sind, das zu wenigstens 60 Gew.-% Isobuten einpolymerisiert enthält.

5. Verbindungen bzw. Polymer gemäß einem der vorstehenden Ansprüche, **dadurch gekennzeichnet, dass** genau einer der Reste R¹ bis R⁵ C₈-C₃₅₀₀-Polyisobutyl oder C₈-C₃₅₀₀-Polyisobutenyl darstellt.

6. Verbindungen bzw. Polymer gemäß einem der vorstehenden Ansprüche, **dadurch gekennzeichnet, dass** R³ einen C₈-C₃₅₀₀-Polyisobutyl- oder C₈-C₃₅₀₀-Polyisobutenylrest darstellt und die anderen nicht.

7. Verbindungen bzw. Polymer gemäß einem der vorstehenden Ansprüche, **dadurch gekennzeichnet, dass** die Reste R¹ bis R⁵, die nicht einen Polyisobutyl- oder Polyisobutenylreste darstellen, ausgewählt sind aus der Gruppe bestehend aus Wasserstoff, Methyl und tert.-Butyl.

8. Verbindungen bzw. Polymer gemäß einem der vorstehenden Ansprüche, **dadurch gekennzeichnet, dass** R ausgewählt ist aus der Gruppe bestehend aus 1,2-Ethylen, 1,2-Propylen, 1,2-Butylen, 1-Phenyl-1,2-ethylen und 2-Phenyl-1,2-ethylen.

9. Verbindungen bzw. Polymer gemäß einem der vorstehenden Ansprüche, **dadurch gekennzeichnet, dass** n gleich 1 ist.

10. Verbindungen bzw. Polymer gemäß einem der vorstehenden Ansprüche, **dadurch gekennzeichnet, dass** R⁷ Wasserstoff oder COOR⁸ ist.

11. Verbindungen bzw. Polymer gemäß einem der vorstehenden Ansprüche, **dadurch gekennzeichnet, dass** der Halogengehalt bestimmt per Combustion IC, nicht mehr als 70 Gew.ppm beträgt.

12. Verbindungen gemäß einem der Ansprüche 1 oder 3 bis 11, **dadurch gekennzeichnet, dass** die mittlere Funktionalität, bestimmt mittels quantitativer 1H-NMR Spektroskopie, an α,β-ungesättigen Carbonylfunktionen, bevorzugt an (Meth)Acrylatgruppen mindestens 0,8 und nicht mehr als 1,2 beträgt.

13. Polymer gemäß einem der Ansprüche 2 bis 11, **dadurch gekennzeichnet, dass** es sich bei dem Polymer um ein Homopolymer handelt, das ausschließlich Verbindungen der Formel (I) in einpolymerisierter Form enthält.

14. Polymer gemäß einem der Ansprüche 2 bis 11, **dadurch gekennzeichnet, dass** es sich bei dem Polymer um ein Copolymer handelt, das neben mindestens einer Verbindung der Formel (I) auch mindestens ein anderes Monomer (B) enthält.

15. Polymer gemäß Anspruch 14, **dadurch gekennzeichnet, dass** das mindestens eine andere Monomer (B) ausgewählt ist aus der Gruppe bestehend aus Monomeren (B1), (B3), (B4) und (B7).

16. Verfahren zur Herstellung von Verbindungen gemäß Anspruch 1, **dadurch gekennzeichnet, dass** man Phenole der Formel 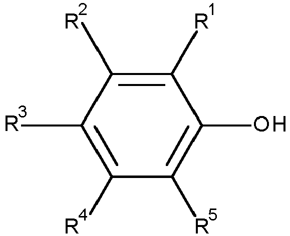 mit Alkylencarbonaten der Formel 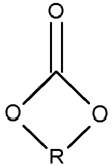 gefolgt von einer Decarboxylierung und anschließender Veresterung mit (Meth)acrylsäure, Crotonsäure, Fumarsäure, Maleinsäure oder Maleinsäureanhydrid oder durch Umesterung mit (Meth)acrylsäureestern, Crotonsäureestern, Fumarsäureestern oder Maleinsäureestern umsetzt.

17. Verfahren zur Herstellung von Polymeren gemäß Anspruch 2, **dadurch gekennzeichnet, dass** man die Monomerkomponenten (A) sowie optional (B) mittels Miniemulsionspolymerisation polymerisiert.

18. Verwendung von Verbindungen gemäß einem der Ansprüche 1 oder 3 bis 12 bzw. Polymer gemäß einem der Ansprüche 2 bis 11 oder 13 bis 15 in der Herstellung von Klebstoffen, Klebrohstoffen, Kraftstoffadditiven, Schmierstoffadditiven, als Elastomere oder als Grundbestandteil von Dichtungs- und Versiegelungsmassen.

## Claims

1. A compound (A) of the formula (I) 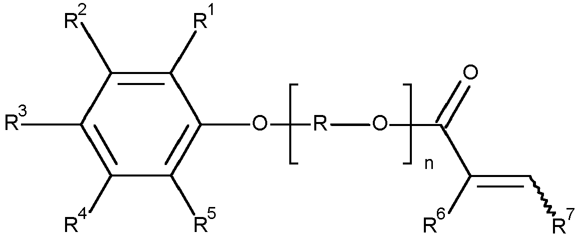 in which
R¹ to R⁵ are each independently selected from the group consisting of hydrogen, C₁-C₂₀-alkyl, C₁-C₂₀-alkyloxy and C₈-C₃₅₀₀-polyisobutyl and C₈-C₃₅₀₀-polyisobutenyl,
R is an alkylene group having 2 to 10 carbon atoms, R⁶ is hydrogen or methyl,
R⁷ is hydrogen, methyl or COOR⁸,
R⁸ is hydrogen or C₁-C₂₀-alkyl and
n is a positive integer from 1 to 50,
with the proviso that
at least one of the R¹ to R⁵ radicals is a C₈-C₃₅₀₀-polyisobutyl or C₈-C₃₅₀₀-polyisobutenyl,
and is derived from polyisobutene having a content of terminal double bonds of at least 50 mol%, based on the total number of polyisobutene macromolecules,

2. A polymer comprising, in polymerized form,
at least one compound (A) of the formula (I) 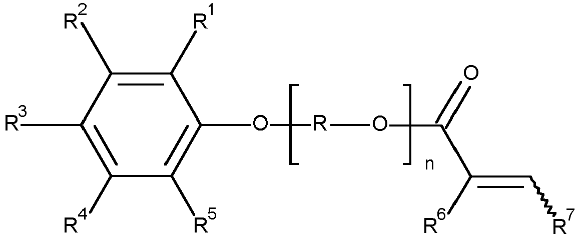 in which
R¹ to R⁵ are each independently selected from the group consisting of hydrogen, C₁-C₂₀-alkyl, C₁-C₂₀-alkyloxy and C₈-C₃₅₀₀-polyisobutyl and C₈-C₃₅₀₀-polyisobutenyl,
R is an alkylene group having 2 to 10 carbon atoms,
R⁶ is hydrogen or methyl,
R⁷ is hydrogen, methyl or COOR⁸,
R⁸ is hydrogen or C₁-C₂₀-alkyl and
n is a positive integer from 1 to 50,
with the proviso that
at least one of the R¹ to R⁵ radicals is a C₈-C₃₅₀₀-polyisobutyl or C₈-C₃₅₀₀-polyisobutenyl,
and is derived from polyisobutene having a content of terminal double bonds of at least 50 mol%, based on the total number of polyisobutene macromolecules, and optionally at least one monomer (B) selected from the group consisting of
(B1) (meth)acrylates other than (A),
(B2) fumaric and maleic acid derivatives other than (A),
(B3) alkyl vinyl ethers
(B4) styrene and α-methylstyrene
(B5) acrylonitrile
(B6) vinyl alkanoates and
(B7) (meth)acrylamides.

3. A compound or polymer according to either of the preceding claims, wherein the C₈-C₃₅₀₀-polyisobutyl and C₈-C₃₅₀₀-polyisobutenyl radicals incorporated into the compounds of the formula (I) are derived from polyisobutene having a content of terminal double bonds of at least 60 mol%, based on the total number of polyisobutene macromolecules.

4. A compound or polymer according to any of the preceding claims, wherein the C₈-C₃₅₀₀-polyisobutyl and C₈-C₃₅₀₀-polyisobutenyl radicals incorporated into the compounds of the formula (I) are derived from polyisobutene comprising at least 60% by weight of isobutene in polymerized form.

5. A compound or polymer according to any of the preceding claims, wherein exactly one of the R¹ to R⁵ radicals is C₈-C₃₅₀₀-polyisobutyl or C₈-C₃₅₀₀-polyisobutenyl.

6. A compound or polymer according to any of the preceding claims, wherein R³ is a C₈-C₃₅₀₀-polyisobutyl or C₈-C₃₅₀₀-polyisobutenyl radical and the other radicals are not.

7. A compound or polymer according to any of the preceding claims, wherein the R¹ to R⁵ radicals that are not a polyisobutyl or polyisobutenyl radical are selected from the group consisting of hydrogen, methyl and tert-butyl.

8. A compound or polymer according to any of the preceding claims, wherein R is selected from the group consisting of 1,2-ethylene, 1,2-propylene, 1,2-butylene, 1-phenyl-1,2-ethylene and 2-phenyl-1,2-ethylene.

9. A compound or polymer according to any of the preceding claims, wherein n is 1.

10. A compound or polymer according to any of the preceding claims, wherein R⁷ is hydrogen or COOR⁸.

11. A compound or polymer according to any of the preceding claims, wherein the halogen content, determined by combustion IC, is not more than 70 ppm by weight.

12. A compound according to any of claims 1 or 3 to 11, wherein the average functionality, determined by means of quantitative 1H NMR spectroscopy, of α,β-unsaturated carbonyl functions, preferably of (meth)acrylate groups, is at least 0.8 and not more than 1.2.

13. A polymer according to any of claims 2 to 11, wherein the polymer is a homopolymer comprising exclusively compounds of the formula (I) in polymerized form.

14. A polymer according to any of claims 2 to 11, wherein the polymer is a copolymer comprising not only at least one compound of the formula (I) but also at least one other monomer (B).

15. A polymer according to claim 14, wherein the at least one other monomer (B) is selected from the group consisting of monomers (B1), (B3), (B4) and (B7) .

16. A process for preparing compounds according to claim 1, wherein phenols of the formula 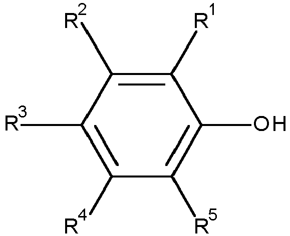 are reacted with alkylene carbonates of the formula 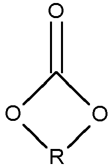 followed by a decarboxylation and subsequent esterification with (meth)acrylic acid, crotonic acid, fumaric acid, maleic acid or maleic anhydride, or by transesterification with (meth)acrylic esters, crotonic esters, fumaric esters or maleic esters.

17. A process for preparing polymers according to claim 2, which comprises polymerizing the monomer components (A) and optionally (B) by means of miniemulsion polymerization.

18. The use of compounds according to any of claims 1 or 3 to 12 or polymer according to any of claims 2 to 11 or 13 to 15 in the production of adhesives, adhesive raw materials, fuel additives, lubricant additives, as elastomers or as base constituent of sealants and sealing compounds.

## Revendications

1. Composés (A) de formule (I) 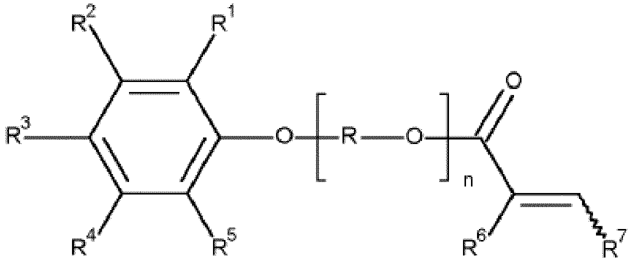 dans laquelle
R¹ à R⁵, à chaque fois indépendamment les uns des autres, sont choisis dans le groupe constitué par hydrogène, C₁₋₂₀-alkyle, C₁₋₂₀-alkyloxy et C₈₋₃₅₀₀-polyisobutyle et C₈₋₃₅₀₀-polyisobutényle,
R signifie un groupe alkylène présentant 2 à 10 atomes de carbone,
R⁶ signifie hydrogène ou méthyle,
R⁷ signifie hydrogène, méthyle ou COOR⁸,
R⁸ signifie hydrogène ou C₁₋₂₀-alkyle et
n signifie un nombre entier positif de 1 à 50, étant entendu qu'au moins un des radicaux R¹ à R⁵ représente un C₈₋₃₅₀₀-polyisobutyle ou un C₈₋₃₅₀₀-polyisobutényle
et est dérivé de polyisobutène, qui présente une teneur en doubles liaisons disposées de manière terminale d'au moins 50 % en moles, par rapport au nombre total de macromolécules de polyisobutène.

2. Polymères, contenant sous forme polymérisée au moins un composé (A) de formule (I) 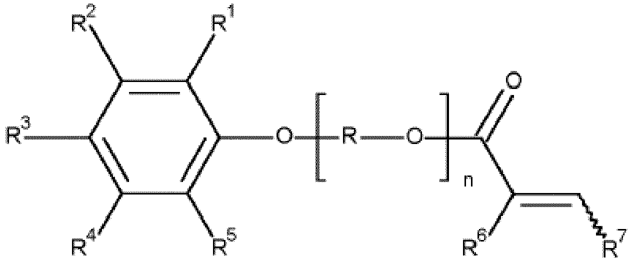 dans laquelle
R¹ à R⁵, à chaque fois indépendamment les uns des autres, sont choisis dans le groupe constitué par hydrogène, C₁₋₂₀-alkyle, C₁₋₂₀-alkyloxy et C₈₋₃₅₀₀-polyisobutyle et C₈₋₃₅₀₀-polyisobutényle,
R signifie un groupe alkylène présentant 2 à 10 atomes de carbone,
R⁶ signifie hydrogène ou méthyle,
R⁷ signifie hydrogène, méthyle ou COOR⁸,
R⁸ signifie hydrogène ou C₁₋₂₀-alkyle et
n signifie un nombre entier positif de 1 à 50, étant entendu qu'au moins un des radicaux R¹ à R⁵ représente un C₈₋₃₅₀₀-polyisobutyle ou un C₈₋₃₅₀₀-polyisobutényle
et est dérivé de polyisobutène, qui présente une teneur en doubles liaisons disposées de manière terminale d'au moins 50 % en moles, par rapport au nombre total de macromolécules de polyisobutène,
et éventuellement au moins un monomère (B) choisi dans le groupe constitué par
(B1) d'autres (méth)acrylates que (A)
(B2) d'autres dérivés d'acide fumarique et d'acide maléique que (A)
(B3) un alkylvinyléther
(B4) le styrène et l'α-méthylstyrène
(B5) l'acrylonitrile
(B6) des alcanoates de vinyle et
(B7) des (méth)acrylamides.

3. Composés ou polymère selon l'une quelconque des revendications précédentes, caractérisé(s) en ce que les radicaux C₈₋₃₅₀₀-polyisobutyle et C₈₋₃₅₀₀-polyisobutényle incorporés dans les composés de formule (I) sont dérivés de polyisobutène, qui présente une teneur en doubles liaisons disposées de manière terminale d'au moins 60 % en moles, par rapport au nombre total de macromolécules de polyisobutène.

4. Composés ou polymère selon l'une quelconque des revendications précédentes, caractérisé(s) en ce que les radicaux C₈₋₃₅₀₀-polyisobutyle et C₈₋₃₅₀₀-polyisobutényle incorporés dans les composés de formule (I) sont dérivés de polyisobutène, qui contient au moins 60 % en poids d'isobutène sous forme polymérisée.

5. Composés ou polymère selon l'une quelconque des revendications précédentes, caractérisé(s) en ce qu'exactement un des radicaux R¹ à R⁵ représente C₈₋₃₅₀₀-polyisobutyle ou C₈₋₃₅₀₀-polyisobutényle.

6. Composés ou polymère selon l'une quelconque des revendications précédentes, caractérisé(s) en ce que R³ représente un C₈₋₃₅₀₀-polyisobutyle ou un C₈₋₃₅₀₀-polyisobutényle et les autres pas.

7. Composés ou polymère selon l'une quelconque des revendications précédentes, caractérisé(s) en ce que les radicaux R¹ à R⁵, qui ne représentent pas un radical polyisobutyle ou polyisobutényle, sont choisis dans le groupe constitué par hydrogène, méthyle et tert-butyle.

8. Composés ou polymère selon l'une quelconque des revendications précédentes, caractérisé(s) en ce que R est choisi dans le groupe constitué par 1,2-éthylène, 1,2-propylène, 1,2-butylène, 1-phényl-1,2-éthylène et 2-phényl-1,2-éthylène.

9. Composés ou polymère selon l'une quelconque des revendications précédentes, caractérisé(s) en ce que n est égal à 1.

10. Composés ou polymère selon l'une quelconque des revendications précédentes, caractérisé(s) en ce que R⁷ est hydrogène ou COOR⁸.

11. Composés ou polymère selon l'une quelconque des revendications précédentes, caractérisé(s) en ce que la teneur en halogène déterminée par CI à combustion n'est pas supérieure à 70 ppm en poids.

12. Composés selon l'une quelconque des revendications 1 ou 3 à 11, **caractérisés en ce que** la fonctionnalité moyenne, déterminée au moyen de spectroscopie RMN ¹H quantitative, de fonctions carbonyle α,β-insaturé, préférablement de groupes (méth)acrylate est d'au moins 0,8 et non supérieure à 1,2.

13. Polymère selon l'une quelconque des revendications 2 à 11, **caractérisé en ce que** le polymère est un homopolymère qui contient exclusivement des composés de formule (I) sous forme polymérisée.

14. Polymère selon l'une quelconque des revendications 2 à 11, **caractérisé en ce que** le polymère est un copolymère qui contient, outre au moins un composé de formule (I), également au moins un autre monomère (B).

15. Polymère selon la revendication 14, **caractérisé en ce que** l'au moins un autre monomère (B) est choisi dans le groupe constitué par les monomères (B1), (B3), (B4) et (B7).

16. Procédé pour la préparation de composés selon la revendication 1, **caractérisé en ce qu'**on transforme des phénols de formule 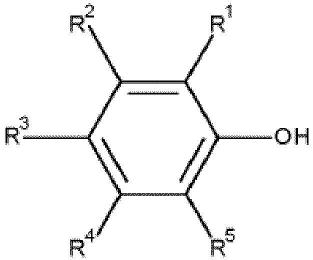 avec des carbonates d'alkylène de formule 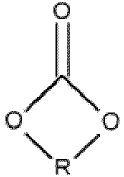 suivi par une décarboxylation et une estérification ultérieure avec l'acide (méth)acrylique, l'acide crotonique, l'acide fumarique, l'acide maléique ou l'anhydride de l'acide maléique ou par transestérification avec des esters d'acide (méth)acrylique, des esters d'acide crotonique, des esters d'acide fumarique ou des esters d'acide maléique.

17. Procédé pour la préparation de polymères selon la revendication 2, **caractérisé en ce que** l'on polymérise les composants monomériques (A) ainsi qu'éventuellement (B) au moyen d'une polymérisation en miniémulsion.

18. Utilisation de composés selon l'une quelconque des revendications 1 ou 3 à 12 ou d'un polymère selon l'une quelconque des revendications 2 à 11 ou 13 à 15 dans la préparation d'adhésifs, de matières premières d'adhésifs, d'additifs pour combustibles, d'additifs pour lubrifiants, en tant qu'élastomères ou en tant qu'ingrédient de base de masses d'étanchéité et de masses de scellement.
